# EUROPEAN PATENT APPLICATION

(11) **EP 4 838 793 A1**
(43) Date of publication of application: **11.11.2026**
(21) Application number: 24914691.1
(22) Date of filing: 05.01.2024
(51) Int. Cl.: H04B 7/0456

(54) **COMMUNICATION METHOD, TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHANG, Zhenyu, Beijing 100085 (CN)
(74) Representative: Dehns Germany Partnerschaft mbB
(86) International application number: PCT/CN2024/070978
(87) International publication number: WO 2025/145462

(57) **Abstract**

A communication method, a terminal, a network device, a communication system and a storage medium. The method comprises: a terminal determining that the terminal is located in a near-field region, and determining a first codeword in a near-field codebook, wherein the near-field codebook is determined on the basis of a candidate first basis vector, and the candidate first basis vector is a basis vector used for the near-field region; and the terminal sending first information to a network device, wherein the first information is used for indicating the first codeword. A first codeword determined by a terminal can better match wireless propagation characteristics of a near-field region, thereby improving the transmission performance of the near-field region.

## Description

### TECHNICAL FIELD

The present disclosure relates to the field of communication technologies, and in particular, to a communication method, a terminal, a network device, a communication system, and a storage medium.

### BACKGROUND

Multiple-Input Multiple-Output (MIMO) technologies effectively improve system capacity and throughput by introducing multi-antenna technologies. On the one hand, continuously increasing the number of antennas will further improve system performance; on the other hand, the introduction of higher frequency bands will lead to greater path loss, while a larger number of antennas can provide greater beamforming gain.

### SUMMARY

Embodiments of the present disclosure provide a communication method, a terminal, a network device, a communication system, and a storage medium.

According to a first aspect of the embodiments of the present disclosure, there is provided a communication method. The method includes:
determining, by a terminal, that the terminal is in a near-field region, and determining, by the terminal, a first codeword in a near-field codebook, where the near-field codebook is determined based on a candidate first basis vector, and the candidate first basis vector is a basis vector used for the near-field region; and
sending, by the terminal, first information to a network device, where the first information is used for indicating the first codeword.

According to a second aspect of the embodiments of the present disclosure, there is provided a communication method. The method includes:
receiving, by a network device, first information sent by a terminal, where the first information is used for indicating a first codeword, the first codeword is a codeword in a near-field codebook, the near-field codebook is determined based on a candidate first basis vector, and the candidate first basis vector is a basis vector used for a near-field region.

According to a third aspect of the embodiments of the present disclosure, there is provided a terminal. The terminal includes:
a processing module, configured to determine that the terminal is in a near-field region, and determine a first codeword in a near-field codebook, where the near-field codebook is determined based on a candidate first basis vector, and the candidate first basis vector is a basis vector used for the near-field region; and
a transceiver module, configured to send first information to a network device, where the first information is used for indicating the first codeword.

According to a fourth aspect of the embodiments of the present disclosure, there is provided a network device. The network device includes:
a transceiver module, configured to receive first information sent by a terminal, where the first information is used for indicating a first codeword, the first codeword is a codeword in a near-field codebook, the near-field codebook is determined based on a candidate first basis vector, and the candidate first basis vector is a basis vector used for a near-field region.

According to a fifth aspect of the embodiments of the present disclosure, there is provided a communication method. The method is applied to a communication system. The communication system includes a terminal and a network device. The method includes:
determining, by the terminal, that the terminal is in a near-field region, and determining, by the terminal, a first codeword in a near-field codebook, where the near-field codebook is determined based on a candidate first basis vector, and the candidate first basis vector is a basis vector used for the near-field region.

According to a sixth aspect of the embodiments of the present disclosure, there is provided a terminal, including:
one or more processors; and
a memory coupled to the one or more processors, where the memory includes an executable instruction, and the executable instruction, when executed by the one or more processors, causes the terminal to perform the communication method according to the first aspect.

According to a seventh aspect of the embodiments of the present disclosure, there is provided a network device, including:
one or more processors; and
a memory coupled to the one or more processors, where the memory includes an executable instruction, and the executable instruction, when executed by the one or more processors, causes the network device to perform the communication method according to the second aspect.

According to an eighth aspect of the embodiments of the present disclosure, there is provided a communication system. The communication system includes a terminal and a network device, where the terminal is configured to implement the communication method according to the first aspect, and the network device is configured to implement the communication method according to the second aspect.

According to a ninth aspect of the embodiments of the present disclosure, there is provided a storage medium. The storage medium stores an instruction. The instruction, when executed on a communication device, causes the communication device to perform the communication method according to the first aspect or the second aspect.

In the above embodiments, a near-field codebook can be constructed by introducing a candidate first basis vector on the basis of a candidate second basis vector used by the terminal in a far-field region. This allows the near-field codebook with the introduced candidate first basis vector to be reliably used for near-field transmission between the terminal and the network device, enabling the first codeword determined by the terminal to better match the wireless propagation characteristics of the near-field region, thereby improving transmission performance in the near-field region.

### BRIEF DESCRIPTION OF THE DRAWINGS

In order to more clearly illustrate the technical solutions in the embodiments of the present disclosure, the following introduces the drawings required for describing the embodiments. The following drawings are only some embodiments of the present disclosure, and do not impose specific limitations on the scope of protection of the present disclosure.
FIG. 1A is an exemplary schematic diagram of an architecture of a communication system provided according to an embodiment of the present disclosure.
FIG. 1B is an exemplary schematic diagram of a first antenna array provided according to an embodiment of the present disclosure.
FIG. 1C is an exemplary schematic diagram of a first antenna array provided according to an embodiment of the present disclosure.
FIG. 2 is an exemplary schematic interaction diagram of a communication method provided according to an embodiment of the present disclosure.
FIG. 3A is an exemplary schematic flowchart of a communication method provided according to an embodiment of the present disclosure.
FIG. 3B is an exemplary schematic flowchart of a communication method provided according to an embodiment of the present disclosure.
FIG. 3C is an exemplary schematic flowchart of a communication method provided according to an embodiment of the present disclosure.
FIG. 4A is an exemplary schematic flowchart of a communication method provided according to an embodiment of the present disclosure.
FIG. 4B is an exemplary schematic flowchart of a communication method provided according to an embodiment of the present disclosure.
FIG. 4C is an exemplary schematic flowchart of a communication method provided according to an embodiment of the present disclosure.
FIG. 5 is an exemplary schematic interaction diagram of a communication method provided according to an embodiment of the present disclosure.
FIG. 6 is an exemplary schematic flowchart of a communication method provided according to an embodiment of the present disclosure.
FIG. 7A is an exemplary schematic structural diagram of a terminal provided according to an embodiment of the present disclosure.
FIG. 7B is an exemplary schematic structural diagram of a network device provided according to an embodiment of the present disclosure.
FIG. 8A is an exemplary schematic structural diagram of a communication device provided according to an embodiment of the present disclosure.
FIG. 8B is an exemplary schematic structural diagram of a communication device provided according to an embodiment of the present disclosure.

### DETAILED DESCRIPTION

The embodiments of the present disclosure provide a communication method, a terminal, a network device, a communication system, and a storage medium.

According to a first aspect, the embodiments of the present disclosure provide a communication method. The method includes:
determining, by a terminal, that the terminal is in a near-field region, and determining, by the terminal, a first codeword in a near-field codebook, where the near-field codebook is determined based on a candidate first basis vector, and the candidate first basis vector is a basis vector used for the near-field region; and
sending, by the terminal, first information to a network device, where the first information is used for indicating the first codeword.

In the above embodiment, a near-field codebook can be constructed by introducing a candidate first basis vector on the basis of a candidate second basis vector used by the terminal in a far-field region. This allows the near-field codebook with the introduced candidate first basis vector to be reliably used for near-field transmission between the terminal and the network device, enabling the first codeword determined by the terminal to better match the wireless propagation characteristics of the near-field region, thereby improving transmission performance in the near-field region.

In combination with some embodiments of the first aspect, in some embodiments, the near-field codebook is determined based on the candidate first basis vector and a candidate second basis vector, and the candidate second basis vector is a basis vector of a codebook used by the terminal in a far-field region.

In the above embodiments, by multiplying the candidate first basis vector and the second basis vector, a near-field codebook that better conforms to near-field transmission characteristics can be reliably obtained.

In combination with some embodiments of the first aspect, in some embodiments, the candidate first basis vector includes a basis vector in a horizontal dimension and a basis vector in a vertical dimension, and the candidate first basis vector is a Kronecker product of the basis vector in the horizontal dimension and the basis vector in the vertical dimension that are in the candidate first basis vector; and
the candidate second basis vector includes a basis vector in the horizontal dimension and a basis vector in the vertical dimension, and the candidate second basis vector is a Kronecker product of the basis vector in the horizontal dimension and the basis vector in the vertical dimension that are in the candidate second basis vector.

In combination with some embodiments of the first aspect, in some embodiments, a number of an antenna port, in a horizontal dimension, of a first antenna array of the network device is N₁, and a number of an antenna port, in a vertical dimension, of the first antenna array of the network device is N₂, where N₁ is greater than or equal to 1, and N₂ is greater than or equal to 1.

In combination with some embodiments of the first aspect, in some embodiments, the candidate first basis vector is determined based on a distance parameter, and the distance parameter includes at least one first distance parameter in the horizontal dimension and at least one second distance parameter in the vertical dimension,
an ${n}_{1}^{′}$-th element ${ν}_{{n}_{1}^{′}}^{"}$ of a basis vector v", in the horizontal dimension, in the candidate first basis vector is:
   ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right) ;$ and
an ${n}_{2}^{′}$-th element ${u}_{{n}_{2}^{′}}^{"}$ of a basis vector *u",* in the vertical dimension, in the candidate first basis vector is:
   ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right) ;$
where ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$, and ${n}_{2}^{′} = {n}_{2} + \left({N}_{2}+1\right) / 2$;
*o*₁ denotes the first distance parameter corresponding to the candidate first basis vector, *o*₂ denotes the second distance parameter corresponding to the candidate first basis vector, *O*₃ denotes an oversampling factor of the distance parameter in the horizontal dimension, *O*₄ denotes an oversampling factor of the distance parameter in the vertical dimension, *o*₁ = 1,2,···,*N*₃*O*₃, and *o*₂ = 1,2,···,*N*₄*O*₄; and
j is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

In the embodiments of the present disclosure, based on the above formula, the distance parameter in the horizontal dimension and the distance parameter in the vertical dimension, the candidate first basis vector corresponding to each distance parameter can be accurately determined, and thus a corresponding near-field codebook can be obtained through construction, which can ensure near-field transmission performance.

In combination with some embodiments of the first aspect, in some embodiments, ${D}_{x} = {N}_{1} {d}_{x} = {N}_{1} \frac{λ}{2}$, and ${D}_{z} = {N}_{2} {d}_{z} = {N}_{2} \frac{λ}{2}$, the ${n}_{1}^{′}$ -th element ${ν}_{{n}_{1}^{′}}^{"}$ of the basis vector v" , in the horizontal dimension, in the candidate first basis vector is: ${ν}_{{n}_{1}^{′}}^{"} = exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; and the ${n}_{2}^{′}$ -th element ${u}_{{n}_{2}^{′}}^{"}$ of the basis vector *u" ,* in the vertical dimension, in the candidate first basis vector is: ${u}_{{n}_{2}^{′}}^{"} = exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

In combination with some embodiments of the first aspect, in some embodiments, the candidate second basis vector is determined based on an angle parameter, the angle parameter includes at least one first angle parameter in the horizontal dimension and at least one second angle parameter in the vertical dimension, an ${n}_{1}^{′}$-th element ${ν}_{{n}_{1}^{′}}^{′}$ of a basis vector v' , in the horizontal dimension, in the candidate second basis vector is: ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$; and an ${n}_{2}^{′}$ -th element ${u}_{{n}_{2}^{′}}^{′}$ of a basis vector *u',* in the vertical dimension, in the candidate second basis vector is: ${u}_{{n}_{2}^{′}}^{′} = exp \left(j\frac{2 π}{λ}⋅\frac{2 {mn}_{2}^{′} {d}_{z}}{{N}_{2} {O}_{2}}\right)$; where *l* denotes the first angle parameter corresponding to the candidate second basis vector, m denotes the second angle parameter corresponding to the candidate second basis vector, *O*₁ denotes an oversampling factor of the angle parameter in the horizontal dimension, *O*₂ denotes an oversampling factor of the angle parameter in the vertical dimension, *l* = 0,1,···,*N*₁*O*₁ -1, and m = 0,1,···*,N*₂*O*₂-1.

In the embodiments of the present disclosure, based on the above formula, the angle parameter in the horizontal dimension and the angle parameter in the vertical dimension, the candidate second basis vector corresponding to each angle parameter can be accurately determined, and thus a corresponding near-field codebook can be obtained through construction, which can ensure near-field transmission performance.

In combination with some embodiments of the first aspect, in some embodiments, the first information includes at least one of the following: a first indication field, where the first indication field is used for indicating a first angle parameter corresponding to the first codeword; a second indication field, where the second indication field is used for indicating a second angle parameter corresponding to the first codeword; a third indication field, where the third indication field is used for indicating a first distance parameter corresponding to the first codeword; and a fourth indication field, where the fourth indication field is used for indicating a second distance parameter corresponding to the first codeword.

In the embodiments of the present disclosure, the terminal can accurately report, through the first information, the angle parameter and distance parameter in the horizontal dimension and/or vertical dimension that are corresponding to the first codeword, allowing the network device to accurately obtain, based on the first information, the first codeword determined by the terminal, and perform near-field transmission based on the first codeword, which can effectively improving the reliability of near-field transmission.

In combination with some embodiments of the first aspect, in some embodiments, the first indication field at least includes $\left⌈{log}_{2} {N}_{1}{O}_{1}\right⌉$ bits; the second indication field at least includes $\left⌈{log}_{2}{N}_{2}{O}_{2}\right⌉$ bits; the third indication field at least includes $\left⌈{log}_{2}{N}_{3}{O}_{3}\right⌉$ bits; and the fourth indication field at least includes $\left⌈{log}_{2} {N}_{4}{O}_{4}\right⌉$ bits.

In the above embodiments, minimal indication fields can be used to indicate the parameters, effectively reducing resource overhead for first codeword feedback.

In combination with some embodiments of the first aspect, in some embodiments, the candidate second basis vector is the same as a discrete fourier transform (DFT) basis vector in a downlink (DL) Type I codebook.

In the above embodiments, there is no need to additionally design the candidate second basis vector, and the near-field codebook can be further designed without affecting the existing far-field codebook.

In combination with some embodiments of the first aspect, in some embodiments, determining, by the terminal, that the terminal is in a near-field region of a first antenna array includes at least one of the following: determining, by the terminal, that the terminal is in the near-field region only in a horizontal dimension; determining, by the terminal, that the terminal is in the near-field region only in a vertical dimension; and determining, by the terminal, that the terminal is in the near-field region in both the horizontal dimension and the vertical dimension.

In the above embodiments, when the terminal satisfies any of the above conditions, it can be determined that the terminal is in the near-field region, and the corresponding near-field codebook and codeword can be determined, ensuring the reliability of near-field transmission.

In combination with some embodiments of the first aspect, in some embodiments, the near-field codebook includes at least one of the following: a first near-field codebook, where the first near-field codebook is a codebook used by the terminal when the terminal is in the near-field region only in the horizontal dimension; a second near-field codebook, where the second near-field codebook is a codebook used by the terminal when the terminal is in the near-field region only in the vertical dimension; and a third near-field codebook, where the third near-field codebook is a codebook used by the terminal when the terminal is in the near-field region in both the horizontal dimension and the vertical dimension.

In the above embodiments, corresponding codebooks can be designed based on different states of the terminal in the near-field region, enabling the terminal to determine codewords with better performance in different states, which improves the quality of near-field communication.

In combination with some embodiments of the first aspect, in some embodiments, the near-field codebook is used for single-polarized single-layer transmission; or
the near-field codebook is used for dual-polarized multi-layer transmission.

In the above embodiments, the near-field codebook can be further designed based on a co-phase coefficient, enabling the near-field codebook to be used for dual-polarized multi-layer transmission, effectively improving the flexibility of the near-field codebook.

In combination with some embodiments of the first aspect, in some embodiments, the method includes;
sending, by the terminal, second information to the network device, where the second information is used for indicating a co-phase coefficient corresponding to the first codeword.

In the above embodiments, the terminal, by sending the second information, can report to the network device the co-phase coefficient corresponding to the first codeword, allowing the network device to more accurately determine, based on the co-phase coefficient, the codeword selected by the terminal, which improves the quality of communication with the terminal.

In combination with some embodiments of the first aspect, in some embodiments, determining, by the terminal, the first codeword in the near-field codebook includes:
determining, by the terminal, a first basis vector and a second basis vector; and
determining, by the terminal, the first codeword based on the first basis vector and the second basis vector.

In the above embodiments, the terminal can determine the first codeword in the near-field codebook by using the first basis vector and the second basis vector, ensuring the quality of near-field communication between the terminal and the network device.

In combination with some embodiments of the first aspect, in some embodiments, the method includes:
determining, by the terminal, that a switching between a far-field region and the near-field region occurs, and sending, by the terminal, third information to the network device, where the third information is used for indicating whether the second basis vector is changed.

In the above embodiments, when the switching between the far-field region and the near-field region is performed, whether the second basis vector is changed can be indicated by the third information. Thus, when the second basis vector is not changed, the terminal does not need to send the currently determined second basis vector, which effectively reduces resource overhead.

In combination with some embodiments of the first aspect, in some embodiments, determining, by the terminal, that the switching between the far-field region and the near-field region occurs includes at least one of the following: determining, by the terminal, that the terminal switches from the near-field region to the far-field region in a horizontal dimension; determining, by the terminal, that the terminal switches from the near-field region to the far-field region in a vertical dimension; determining, by the terminal, that the terminal switches from the near-field region to the far-field region in both the horizontal dimension and the vertical dimension; determining, by the terminal, that the terminal switches from the far-field region to the near-field region in the horizontal dimension; determining, by the terminal, that the terminal switches from the far-field region to the near-field region in the vertical dimension; and determining, by the terminal, that the terminal switches from the far-field region to the near-field region in both the horizontal dimension and the vertical dimension.

In a second aspect, the embodiments of the present disclosure provide a communication method. The method includes;
receiving, by a network device, first information sent by a terminal, where the first information is used for indicating a first codeword, the first codeword is a codeword in a near-field codebook, the near-field codebook is determined based on a candidate first basis vector, and the candidate first basis vector is a basis vector used for a near-field region.

In combination with some embodiments of the second aspect, in some embodiments, the near-field codebook is determined based on the candidate first basis vector and a candidate second basis vector, and the candidate second basis vector is a basis vector of a codebook used by the terminal in a far-field region.

In combination with some embodiments of the second aspect, in some embodiments, the candidate first basis vector includes a basis vector in a horizontal dimension and a basis vector in a vertical dimension, and the candidate first basis vector is a Kronecker product of the basis vector in the horizontal dimension and the basis vector in the vertical dimension that are in the candidate first basis vector; and
the candidate second basis vector includes a basis vector in the horizontal dimension and a basis vector in the vertical dimension, and the candidate second basis vector is a Kronecker product of the basis vector in the horizontal dimension and the basis vector in the vertical dimension that are in the candidate second basis vector.

In combination with some embodiments of the second aspect, in some embodiments, a number of an antenna port, in a horizontal dimension, of a first antenna array is N₁, and a number of an antenna port, in a vertical dimension, of the first antenna array is N₂, where N₁ is greater than or equal to 1, and N₂ is greater than or equal to 1.

In combination with some embodiments of the second aspect, in some embodiments, the candidate first basis vector is determined based on a distance parameter, and the distance parameter includes at least one first distance parameter in the horizontal dimension and at least one second distance parameter in the vertical dimension,
an ${n}_{1}^{′}$-th element ${ν}_{{n}_{1}^{′}}^{"}$ of a basis vector v", in the horizontal dimension, in the candidate first basis vector is:
   ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right) ;$ and
an ${n}_{2}^{′}$-th element ${u}_{{n}_{2}^{′}}^{"}$ of a basis vector *u",* in the vertical dimension, in the candidate first basis vector is:
   ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right) ;$
where ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$, and ${n}_{2}^{′} = {n}_{2} + \left({N}_{2}+1\right) / 2$;
*o*₁ denotes the first distance parameter corresponding to the candidate first basis vector, *o*₂ denotes the second distance parameter corresponding to the candidate first basis vector, *O*₃ denotes an oversampling factor of the distance parameter in the horizontal dimension, *O*₄ denotes an oversampling factor of the distance parameter in the vertical dimension, *o*₁ = 1,2,···,*N*₃*O*₃, and *o*₂ = 1,2,···,*N*₄*O*₄; and
j is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

In combination with some embodiments of the second aspect, in some embodiments, ${D}_{x} = {N}_{1} {d}_{x} = {N}_{1} \frac{λ}{2}$, and ${D}_{z} = {N}_{2} {d}_{z} = {N}_{2} \frac{λ}{2}$,
the ${n}_{1}^{′}$-th element ${ν}_{{n}_{1}^{′}}^{"}$ of the basis vector v", in the horizontal dimension, in the candidate first basis vector is:
   ${ν}_{{n}_{1}^{′}}^{"} = exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right) ;$ and
the ${n}_{2}^{′}$ -th element ${u}_{{n}_{2}^{′}}^{"}$ of the basis vector *u"* , in the vertical dimension, in the candidate first basis vector is:
   ${u}_{{n}_{2}^{′}}^{"} = exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

In combination with some embodiments of the second aspect, in some embodiments, the candidate second basis vector is determined based on an angle parameter, the angle parameter includes at least one first angle parameter in the horizontal dimension and at least one second angle parameter in the vertical dimension,
an ${n}_{1}^{′}$-th element ${ν}_{{n}_{1}^{′}}^{′}$ of a basis vector *v*', in the horizontal dimension, in the candidate second basis vector is:
   ${ν}_{{n}_{1}^{′}}^{′} = exp \left(j\frac{2 π}{λ}⋅\frac{2 {ln}_{1}^{′} {d}_{x}}{{N}_{1} {O}_{1}}\right) ;$ and
an ${n}_{2}^{′}$-th element ${u}_{{n}_{2}^{′}}^{′}$ of a basis vector *u',* in the vertical dimension, in the candidate second basis vector is:
   ${u}_{{n}_{2}^{′}}^{′} = exp \left(j\frac{2 π}{λ}⋅\frac{2 {mn}_{2}^{′} {d}_{z}}{{N}_{2} {O}_{2}}\right) ;$
where *l* denotes the first angle parameter corresponding to the candidate second basis vector, m denotes the second angle parameter corresponding to the candidate second basis vector, *O*₁ denotes an oversampling factor of the angle parameter in the horizontal dimension, *O*₂ denotes an oversampling factor of the angle parameter in the vertical dimension, *l* = 0,1,···, *N*₁*O*₁ - 1, and m = 0,1,···,N₂*O*₂ - 1.

In combination with some embodiments of the second aspect, in some embodiments, the first information includes at least one of the following: a first indication field, where the first indication field is used for indicating a first angle parameter corresponding to the first codeword; a second indication field, where the second indication field is used for indicating a second angle parameter corresponding to the first codeword; a third indication field, where the third indication field is used for indicating a first distance parameter corresponding to the first codeword; and a fourth indication field, where the fourth indication field is used for indicating a second distance parameter corresponding to the first codeword.

In combination with some embodiments of the second aspect, in some embodiments, the first indication field at least includes $\left⌈{log}_{2} {N}_{1}{O}_{1}\right⌉$ bits; the second indication field at least includes $\left⌈{log}_{2}{N}_{2}{O}_{2}\right⌉$ bits; the third indication field at least includes $\left⌈{log}_{2}{N}_{3}{O}_{3}\right⌉$ bits; and the fourth indication field at least includes $\left⌈{log}_{2} {N}_{4}{O}_{4}\right⌉$ bits.

In combination with some embodiments of the second aspect, in some embodiments, the candidate second basis vector is the same as a DFT basis vector in a DL Type I codebook.

In combination with some embodiments of the second aspect, in some embodiments, the terminal being in a near-field region of a first antenna array includes at least one of the following: the terminal being in the near-field region only in a horizontal dimension; the terminal being in the near-field region only in a vertical dimension; and the terminal being in the near-field region in both the horizontal dimension and the vertical dimension.

In combination with some embodiments of the second aspect, in some embodiments, the near-field codebook includes at least one of the following:
a first near-field codebook, where the first near-field codebook is a codebook used by the terminal when the terminal is in the near-field region only in the horizontal dimension;
a second near-field codebook, where the second near-field codebook is a codebook used by the terminal when the terminal is in the near-field region only in the vertical dimension; and
a third near-field codebook, where the third near-field codebook is a codebook used by the terminal when the terminal is in the near-field region in both the horizontal dimension and the vertical dimension.

In combination with some embodiments of the second aspect, in some embodiments, the near-field codebook is used for single-polarized single-layer transmission; or
the near-field codebook is used for dual-polarized multi-layer transmission.

In combination with some embodiments of the second aspect, in some embodiments, the method includes:
receiving, by the network device, second information sent by the terminal, where the second information is used for indicating a co-phase coefficient corresponding to the first codeword.

In combination with some embodiments of the second aspect, in some embodiments, the method includes:
receiving, by the network device, third information sent by the terminal, where the third information is used for indicating whether a second basis vector is changed.

In a third aspect, the embodiments of the present disclosure provide a terminal. The terminal includes:
a processing module, configured to determine that the terminal is in a near-field region of a first antenna array, and determine a first codeword in a near-field codebook, where the near-field codebook is determined based on a candidate first basis vector, and the candidate first basis vector is a basis vector used for the near-field region; and
a transceiver module, configured to send first information to the network device, where the first information is used for indicating the first codeword.

In a fourth aspect, the embodiments of the present disclosure provide a network device. The network device includes:
a transceiver module, configured to receive first information sent by a terminal, where the first information is used for indicating a first codeword, the first codeword is a codeword in a near-field codebook, the near-field codebook is determined based on a candidate first basis vector, and the candidate first basis vector is a basis vector used for a near-field region.

In a fifth aspect, the embodiments of the present disclosure provide a terminal, including: one or more processors; and a memory coupled to the one or more processors, where the memory includes an executable instruction, and the executable instruction, when executed by the one or more processors, causes the terminal to perform the communication method in the first aspect.

In a sixth aspect, the embodiments of the present disclosure provide a network device, including: one or more processors; and a memory coupled to the one or more processors, where the memory includes an executable instruction, and the executable instruction, when executed by the one or more processors, causes the network device to perform the communication method in the second aspect.

In a seventh aspect, the embodiments of the present disclosure provide a communication system. The communication system includes a terminal and a network device; where the terminal is configured to perform the method according to the optional implementations of the first aspect, and the network device is configured to perform the method according to the optional implementations of the second aspect.

In an eighth aspect, the embodiments of the present disclosure provide a storage medium. The storage medium stores an instruction. The instruction, when executed on a communication device, causes the communication device to perform the method according to the optional implementations of the first aspect and the second aspect.

In a ninth aspect, the embodiments of the present disclosure provide a program product. The program product, when executed by a communication device, causes the communication device to perform the method according to the optional implementations of the first aspect and the second aspect.

In a tenth aspect, the embodiments of the present disclosure provide a computer program. The computer program, when executed on a computer, causes the computer to perform the method according to the optional implementations of the first aspect and the second aspect.

In an eleventh aspect, the embodiments of the present disclosure provide a chip or chip system. The chip or chip system includes a processing circuit configured to perform the method according to the optional implementations of the first aspect and the second aspect.

In a twelfth aspect, the embodiments of the present disclosure provide a communication method applied to a communication system, where the communication system includes a terminal and a network device, and the method includes:
determining, by the terminal, that the terminal is in a near-field region, and determining, by the terminal, a first codeword in a near-field codebook, where the near-field codebook is determined based on a candidate first basis vector, and the candidate first basis vector is a basis vector used for the near-field region.

In combination with some embodiments in the twelfth aspect, in some embodiments, the method includes:
sending, by the terminal, first information to the network device; where the first information is used for indicating the first codeword, or the first information is used for indicating the near-field codebook.

In combination with some embodiments in the twelfth aspect, in some embodiments, the method includes:
sending, by the terminal, second information to the network device, where the second information is used for indicating a co-phase coefficient corresponding to the first codeword.

In combination with some embodiments in the twelfth aspect, in some embodiments, the method includes:
receiving, by the network device, third information sent by the terminal, wherein the third information is used for indicating that a switching between a far-field region and the near-field region occurs to the terminal.

It can be understood that the above terminal, network device, communication system, storage medium, program product, computer program, chip or chip system are all used for performing the methods proposed in the embodiments of the present disclosure. Therefore, the beneficial effects they can achieve can refer to the beneficial effects in the corresponding methods, which will not be repeated here.

The embodiments of the present disclosure provide a communication method, a terminal, a network device, a communication system, and a storage medium. In some embodiments, terms such as communication method, codebook determination method, and codeword reporting method can be interchanged, terms such as communication apparatus, codebook determination apparatus, and codeword reporting apparatus can be interchanged, and terms such as information processing system and communication system can be interchanged.

The embodiments of the present disclosure are not exhaustive, but are only illustrative of some embodiments, and do not constitute specific limitations on the scope of protection of the present disclosure. In the absence of conflict, each step in a certain embodiment may be implemented as an independent embodiment, and the steps may be combined in any manner, for example, a scheme in which some steps are removed from a certain embodiment may also be implemented as an independent embodiment, and the orders of the steps in a certain embodiment may be arbitrarily exchanged. In addition, optional implementations in a certain embodiment may be arbitrarily combined. Furthermore, the embodiments may be arbitrarily combined, for example, some or all steps of different embodiments may be arbitrarily combined, and a certain embodiment may be arbitrarily combined with optional implementations of another embodiment.

In the embodiments of the present disclosure, unless otherwise specified and conflicting in logic, the terms and/or descriptions between the embodiments are consistent and may be cross-referenced, and technical features in different embodiments may be combined to form new embodiments according to their inherent logical relationships.

The terms used in the embodiments of the present disclosure are only for the purpose of describing specific embodiments, and do not constitute limitations on the present disclosure.

In the embodiments of the present disclosure, unless otherwise stated, elements expressed in the singular form, such as "a", "an", "the", "above", "said", "aforementioned", "this", etc., may represent "one and only one", or may represent "one or more", or "at least one", and the like. For example, when articles such as "a", "an", "the" in English are used in translation, the nouns following these articles may be understood as singular expression forms or plural expression forms.

In the embodiments of the present disclosure, "a plurality of" may refer to two or more.

In some embodiments, terms such as "at least one of", "one or more", "a plurality of", and "multiple" may be interchanged.

In some embodiments, the reciting manners such as "at least one of A and B", "A and/or B", "in one case A, in another case B", "in response to one case A, in response to another case B" may include the following technical solutions depending on the situation: in some embodiments, A (A is performed regardless of B); in some embodiments, B (B is performed regardless of A); in some embodiments, selectively performing A and B (A and B are selectively performed); and in some embodiments, A and B (both A and B are performed). The same applies when there are more branches such as A, B, C, etc.

In some embodiments, the reciting manners such as "A or B" may include the following technical solutions depending on the situation: in some embodiments, A (A is performed regardless of B); in some embodiments, B (B is performed regardless of A); in some embodiments, selectively performing A and B (A and B are selectively performed). The same applies when there are more branches such as A, B, C, etc.

The prefix words such as "first" and "second" in the embodiments of the present disclosure are only used to distinguish different described objects, and do not constitute limitations on the position, order, priority, number, or content, etc. of the described objects. The description for the described objects may refer to the description in the claims or the context of the embodiments, and the use of prefix words should not constitute unnecessary limitations. For example, if the described object is a "field", then the ordinal numbers before the "field" in the "first field" and the "second field" do not limit the position or order between the "fields", and "first" and "second" do not limit whether the "fields" they modify are in the same message, nor do they limit the sequential order of the "first field" and the "second field". For another example, if the described object is a "level", then the ordinal numbers before the "level" in the "first level" and the "second level" do not limit the priority between the "levels". For yet another example, the number of the described objects is not limited by the ordinal number, and may be one or more. Taking the "first apparatus" as an example, the number of the "apparatus" may be one or more. Furthermore, the objects modified by different prefix words may be the same or different. For example, if the described object is an "apparatus", then the "first apparatus" and the "second apparatus" may be the same apparatus or different apparatuses, and may be of the same type or different types. For another example, if the described object is "information", then the "first information" and the "second information" may be the same information or different information, and their content may be the same or different.

In some embodiments, "comprising A", "including A", "used for indicating A", and "carrying A" may be interpreted as directly carrying A, or may be interpreted as indirectly indicating A.

In some embodiments, terms such as "time frequency (time/frequency)" and "time frequency domain" refer to the time domain and/or frequency domain.

In some embodiments, terms such as "in response to...", "in response to determining...", "in the case of...", "when...", "at the time of...", "if...", "assuming...", etc. may be interchanged.

In some embodiments, terms such as "greater than", "greater than or equal to", "not less than", "more than", "more than or equal to", "not smaller than", "higher than", "higher than or equal to", "not lower than", "above" may be interchanged. Terms such as "less than", "less than or equal to", "not greater than", "smaller than" "smaller than or equal to", "not more than", "lower than", "lower than or equal to", "not higher than", "below" may be interchanged.

In some embodiments, apparatuses, etc., may be interpreted as physical or virtual, and their names are not limited to the names recited in the embodiments. Terms such as "apparatus", "equipment", "device", "circuit", "network element", "node", "function", "unit", "section", "system", "network", "chip", "chip system", "entity", "subject" may be interchanged.

In some embodiments, "network" may be interpreted as a device (e.g., an access network device, a core network device, etc.) included in a network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be interchanged.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be interchanged.

In some embodiments, an access network device, a core network device, or a network device may be replaced by a terminal. For example, the embodiments of the present disclosure may also be applied to a structure in which communication between an access network device, a core network device, or a network device and a terminal is replaced by communication between a plurality of terminals (e.g., device-to-device (D2D), vehicle-to-everything (V2X), etc.). In this case, the terminal may also be configured to have a structure with all or part of the functions of the access network device. In addition, terms such as "uplink", "downlink" may also be replaced by terms corresponding to communication between terminals (e.g., "side"). For example, uplink channel, downlink channel, etc., may be replaced by side channel, and uplink, downlink, etc., may be replaced by side link.

In some embodiments, a terminal may be replaced by an access network device, a core network device, or a network device. In this case, the access network device, core network device, or network device may also be configured to have a structure with all or part of the functions of the terminal.

In some embodiments, obtaining data, information, etc., may comply with the laws and regulations of the country where it is located.

In some embodiments, data, information, etc., may be obtained after the user consent is obtained.

Furthermore, each element, each row, or each column in the tables of the embodiments of the present disclosure may be implemented as an independent embodiment, and the combination of any element, any row, or any column may also be implemented as an independent embodiment.

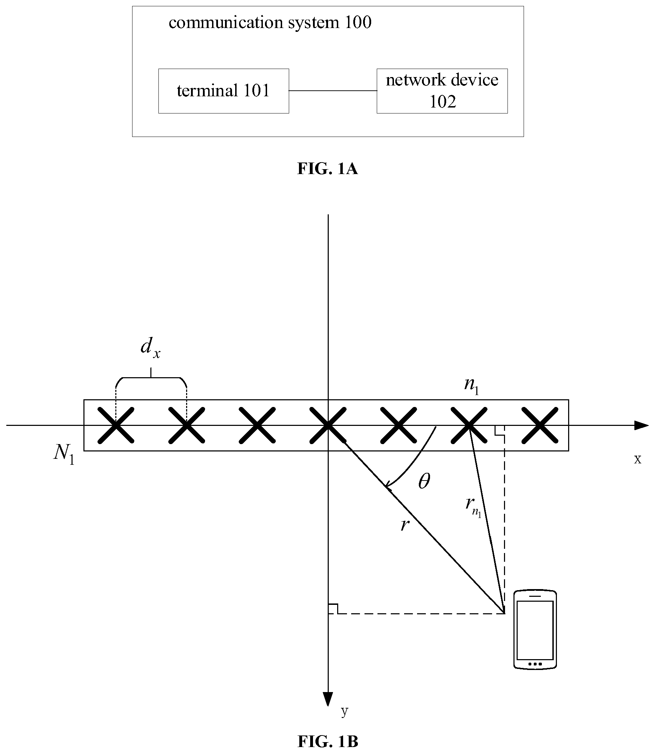

FIG. 1A is a schematic architecture diagram of a communication system illustrated according to an embodiment of the present disclosure. (only system diagrams of the entities related to the inventive point and their important opposite sides are included, and the number of entities corresponds to the number of entities involved in the inventive point).

As shown in FIG. 1A, the communication system 100 includes a terminal 101 and a network device 102. In some embodiments, the network device 102 includes at least one of the following: an access network device, and a core network device.

In some embodiments, the terminal 101 includes, for example, at least one of the following: a mobile phone, a wearable device, an Internet of Things device, a car with communication functions, a smart car, a tablet (pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, but is not limited thereto.

In some embodiments, the access network device is, for example, a node or device that accesses a terminal to a wireless network. The access network device may include at least one of the following: an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, an access node in a Wi-Fi system, but is not limited thereto.

In some embodiments, the technical solutions of the present disclosure may be applicable to an Open RAN architecture. In this case, the interfaces between access network devices or within an access network device referred to in the embodiments of the present disclosure may become internal interfaces of the Open RAN, and the procedures and information exchange between these internal interfaces may be implemented by software or programs.

In some embodiments, the access network device may consist of a central unit (CU) and a distributed unit (DU), where the CU may also be referred to as a control unit. The structure using the CU-DU may split the protocol layers of the access network device, placing the functions of some protocol layers in the CU for centralized control, and distributing the functions of some or all of the remaining protocol layers in the DU, with the CU centrally controlling the DU, but is not limited thereto.

In some embodiments, a core network device may be a single device including a first network element, a second network element, etc., or the core network device may be a plurality of devices or a device group, each including all or part of the first network element, the second network element, etc. described above. A network element may be virtual or physical. The core network includes, for example, at least one of the following: an evolved packet core (EPC), a 5G core network (5GCN), a next generation core (NGC).

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. Those of ordinary skill in the art know that with the evolution of the system architecture and the emergence of new service scenarios, the technical solutions proposed in the embodiments of the present disclosure are equally applicable to similar technical problems.

The following embodiments of the present disclosure may be applied to the communication system 100 shown in FIG. 1A, or part of the entities of the communication system 100, but are not limited thereto. The entities shown in FIG. 1A are examples. The communication system may include all or part of the entities in FIG. 1A, or may include other entities not shown in FIG. 1A. The number and form of each entity are arbitrary. The entities may be physical or virtual. The connection relationships between the entities are examples. The entities may or may not be connected, and the connection may be in any manner, which may be a direct connection or an indirect connection, or may be a wired connection or a wireless connection.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) networks, Device-to-Device (D2D) systems, machine to machine (M2M) systems, Internet of Things (IoT) systems, Vehicle-to-everything (V2X), systems using other communication methods, next-generation systems extended based on them, etc. Furthermore, a plurality of systems (e.g., a combination of LTE or LTE-A and 5G, etc.) may be combined for application.

In some embodiments, the network device 102 may be a network device in an extra large scale massive MIMO (XL-MIMO) system. The network device 102 may include a first antenna array. The first antenna array may be used for the network device to transmit a wireless signal to a terminal. Optionally, the type of the first antenna array may include, but is not limited to: a uniform linear array; and a uniform planar array.

In some embodiments, a radiation range of an antenna array may be divided into a near-field region and a far-field region, the boundary of the near-field region and the far-field region may be represented by the Rayleigh distance, and the Rayleigh distance is proportional to the carrier frequency and the antenna aperture of the antenna array. In some embodiments, the near-field region may include a radiative near-field and/or a reactive near-field.

FIG. 1B is a schematic diagram of a first antenna array illustrated according to an exemplary embodiment. As shown in FIG. 1B, the first antenna array may be modeled on the x-axis of a two-dimensional Cartesian coordinate system, and includes 7 antenna ports in the horizontal dimension, with equal spacing between the 7 antenna ports. That is, the first antenna array is a uniform linear array with N₁ equal to 7 and N₂ equal to 1. The spacing between the antenna ports may be dₓ. Taking the antenna port with an index of 0, in the horizontal dimension, in the first antenna array as the origin (0, 0), the coordinates of the antenna port with an index n₁ in the horizontal dimension may be (n₁dₓ, 0), where n₁ is an integer and satisfies ${n}_{1} ∈ \left\{-\frac{\left({N}_{1}-1\right)}{2},⋯,0,⋯\frac{\left({N}_{1}-1\right)}{2}\right\}$. The length of the antenna array in the horizontal dimension is Dₓ, which may be expressed as *Dₓ = N*₁*dₓ* or *Dₓ* =(*N*₁-1)*dₓ.*

If a terminal is located on the x-y plane of the two-dimensional Cartesian coordinate system, the distance from the terminal to the origin is r, and the angle between the terminal and the positive direction of the x-axis is *θ* and 0 ≤ *θ* ≤ *π* . In this example, the equivalent antenna aperture, in the horizontal dimension, of the antenna array is *D̃ₓ = Dₓ sin θ.* When the terminal is located on the x-y two-dimensional plane, the Rayleigh distance may be calculated as $\frac{2 {{D}^{˜}}_{x}^{2}}{λ} = \frac{2 {D}_{x}^{2} {sin}^{2} θ}{λ}$. Thus, when the distance between the location of the terminal and the first antenna array is less than or equal to the Rayleigh distance, it can be determined that the terminal is in the near-field region; otherwise, it can be determined that the terminal is in the far-field region. In some embodiments, this distance may also be referred to as the Fraunhofer distance.

The distance between the antenna port with index n₁ in the first antenna array and the terminal may be calculated as: ${r}_{{n}_{1}} = \sqrt{{r}^{2} + {n}_{1}^{2} {d}_{x}^{2} - 2 {rn}_{1} {d}_{x} cos θ}$; based on the Taylor formula, by performing a second-order Taylor expansion approximation of the above formula, the distance between the antenna with index n₁ in the antenna array and the UE may be approximately calculated as: ${r}_{{n}_{1}} = \sqrt{{r}^{2} + {n}_{1}^{2} {d}_{x}^{2} - 2 {rn}_{1} {d}_{x} cos θ} \approx r - {n}_{1} {d}_{x} cos θ + \frac{{n}_{1}^{2} {d}_{x}^{2} {sin}^{2} θ}{2 r}$.

The single-polarized array response vector of the first antenna array may be calculated as: ${\left[{a}_{ULA}^{near}\left(θ, r\right)\right]}_{{n}_{1}} = exp \left(-j\frac{2 π}{λ}\left(-{n}_{1}{d}_{x}cosθ+\frac{{n}_{1}^{2} {d}_{x}^{2} {sin}^{2} θ}{2 r}\right)\right)$.

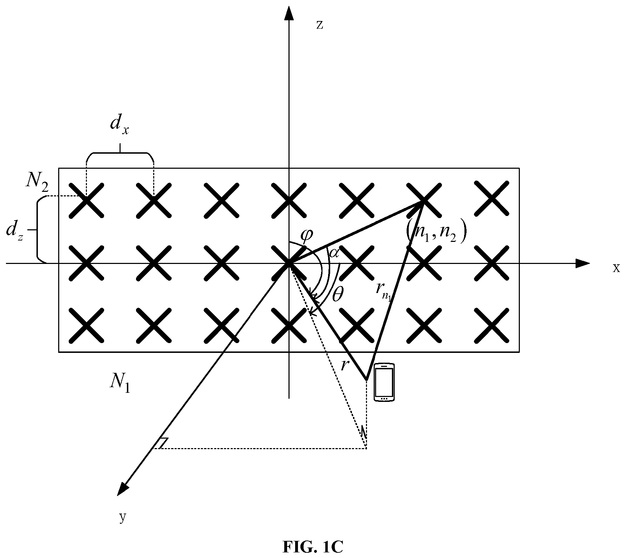

FIG. 1C is a schematic diagram of a first antenna array illustrated according to an exemplary embodiment. As shown in FIG. 1C, the first antenna array may be modeled on the x-y plane of a three-dimensional Cartesian coordinate system. The antenna array has 21 antenna ports, among which the number of antenna ports in the horizontal dimension is 7 and the number of antenna ports in the vertical dimension is 3. The spacing between the antenna ports in their respective dimension is the same, that is, the first antenna array is a uniform planar array with N₁ equal to 7 and N₂ equal to 3. In some embodiments, the spacing between antenna ports in the horizontal dimension may be dₓ, and the spacing between antenna ports in the vertical dimension may be d_{z}. Taking the antenna port with indices of 0 in both the horizontal dimension and the vertical dimension in the first antenna array as the origin (0, 0, 0), the coordinates of the antenna with an index (n₁, n₂) in the horizontal dimension and vertical dimension are (*n*₁*dₓ*,0,*n*₂*d_{z}*) , where n₁ and n₂ are integers and satisfy ${n}_{1} ∈ \left\{-\frac{\left({N}_{1}-1\right)}{2},⋯,0,⋯\frac{\left({N}_{1}-1\right)}{2}\right\}$ and ${n}_{2} ∈ \left\{-\frac{\left({N}_{2}-1\right)}{2},⋯,0,⋯\frac{\left({N}_{2}-1\right)}{2}\right\}$.

If a terminal is located in the x-y-z space of the three-dimensional Cartesian coordinate system, the distance from the terminal to the origin is r, the angle between the terminal and the positive direction of the x-axis is *θ* and 0 ≤ *θ* ≤ *π,* and the angle between the terminal and the positive direction of the z-axis is *φ* and 0 ≤ *φ* ≤ *π* . In this case, based on geometric relationships, it may be obtained that cos *α* = - cos *θ* sin *φ .* In this example, the equivalent antenna aperture in the horizontal dimension of the antenna array is *D̃ₓ = Dₓ sin θ,* and the equivalent antenna aperture in the vertical dimension of the antenna array is *D̃_{z}* = *D_{z} sin φ.* When the terminal is located in the x-y-z three-dimensional space, the Rayleigh distance in the horizontal dimension may be calculated as $\frac{2 {{D}^{˜}}_{x}^{2}}{λ} = \frac{2 {D}_{x}^{2} {sin}^{2} θ}{λ}$, and the Rayleigh distance in the vertical dimension may be calculated as $\frac{2 {{D}^{˜}}_{Z}^{2}}{λ} = \frac{2 {D}_{Z}^{2} {sin}^{2} φ}{λ}$. Thus, when the distance between the location of the terminal and the first antenna array in the horizontal dimension and/or the vertical dimension is less than or equal to the Rayleigh distance, it may be determined that the terminal is in the near-field region.

The distance between the antenna port with index (*n*₁,*n*₂) in the first antenna array and the terminal may be calculated as: ${r}_{{n}_{1} , {n}_{2}} = \sqrt{{r}^{2} + {n}_{1}^{2} {d}_{x}^{2} + {n}_{2}^{2} {d}_{z}^{2} - 2 {rn}_{1} {d}_{x} cos θ sin φ - 2 {rn}_{2} {d}_{z} cos φ}$; based on the Taylor formula, a second-order Taylor expansion approximation is performed on the above formula, the distance between the antenna with index (*n*₁,*n*₂) in the antenna array and the terminal may be approximately calculated as:
$\begin{matrix}{r}_{{n}_{1} , {n}_{2}} = \sqrt{{r}^{2} + {n}_{1}^{2} {d}_{x}^{2} + {n}_{2}^{2} {d}_{z}^{2} - 2 {rn}_{1} {d}_{x} cos θ sin φ - 2 {rn}_{2} {d}_{z} cos φ} \\ \approx r - {n}_{1} {d}_{x} cos θ sin φ + \frac{{n}_{1}^{2} {d}_{x}^{2} \left(1-{cos}^{2}{θsin}^{2}φ\right)}{2 r} - {n}_{2} {d}_{z} cos φ + \frac{{n}_{2}^{2} {d}_{z}^{2} {sin}^{2} φ}{2 r} .\end{matrix}$

The single-polarized array response vector of the first antenna array may be calculated as:
${a}_{UPA}^{near} \left(θ, φ, r\right) = {a}_{x}^{near} \left(θ, φ, r\right) ⊗ {a}_{z}^{near} \left(φ, r\right) ;$
${\left[{a}_{x}^{near}\left(θ, φ, r\right)\right]}_{{n}_{1}} = exp \left(-j\frac{2 π}{λ}\left(-{n}_{1}{d}_{x}cosθsinφ+\frac{{n}_{1}^{2} {d}_{x}^{2} \left(1-{cos}^{2}{θsin}^{2}φ\right)}{2 r}\right)\right) ;$
${\left[{a}_{z}^{near}\left(φ, r\right)\right]}_{{n}_{2}} = exp \left(-j\frac{2 π}{λ}\left(-{n}_{2}{d}_{z}cosφ+\frac{{n}_{2}^{2} {d}_{z}^{2} {sin}^{2} φ}{2 r}\right)\right) .$

In some embodiments, only the far-field region is considered, and the channel model and codebook design are only for the far-field MIMO. However, with the significant increase in antenna array and the increase in frequency bands, the Rayleigh distance increases to a certain extent, causing terminals in the communication system to more easily enter the near-field region of the antenna array. In the near-field region, the propagation form of electromagnetic waves is spherical waves, while in the far-field region, the propagation form of electromagnetic waves is plane waves, making the codebook design for the far-field region unable to ensure the quality of communication in the near-field region.

It should be noted that the first antenna arrays in FIG. 1B and FIG. 1C are only exemplary, and the number of antenna ports in the first antenna array may be less than or greater than the number of antenna ports shown in FIG. 1B or FIG. 1C, which is not limited in the embodiments of the present disclosure. For example, the first antenna array may be an antenna array with 64 ports in both the horizontal dimension and the vertical dimensions.

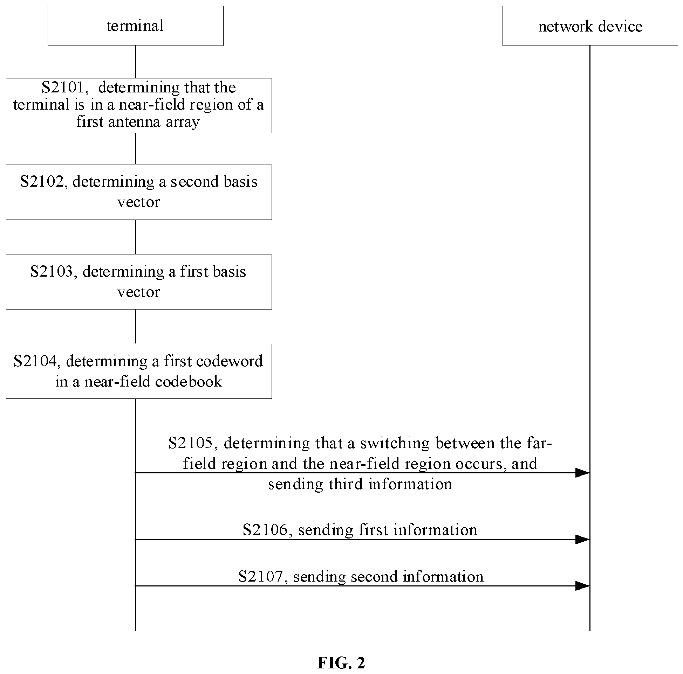

FIG. 2 is an exemplary interaction diagram of a communication method illustrated according to an embodiment of the present disclosure. As shown in FIG. 2, the embodiment of the present disclosure relates to a communication method, and the method includes the following steps S2101 to S2107.

At step S2101, a terminal determines that it is in a near-field region.

It can be understood that the near-field region may refer to a region where the terminal is relatively close to the antenna array. For example, when the distance between the terminal and the first antenna array in the horizontal dimension and/or the vertical dimension is less than or equal to the Rayleigh distance, it may be determined that the terminal is in the near-field region of the first antenna array.

In some embodiments, the first antenna array is the antenna array used by a network device to send wireless signals to the terminal. For example, the network device may precode the data in the data stream based on a codeword, causing that the wireless signal sent by the network device can be accurately and reliably received by the terminal in the near-field region.

In some embodiments, the first antenna array may be any one of the following: a uniform linear array, and a uniform planar array. Optionally, the first antenna array may also be a triangular array or a circular array, which is not limited in the embodiments of the present disclosure.

In some embodiments, the number of the antenna port, in the horizontal dimension, of the first antenna array of the network device is N₁, and the number of the antenna port, in the vertical dimension, of the first antenna array of the network device is N₂, where N₁ is greater than or equal to 1, and N₂ is greater than or equal to 1. Optionally, N₁ is greater than or equal to N₂.

In some embodiments, a uniform linear array may be regarded as a special uniform planar array, that is, a uniform linear array may be a uniform planar array with the number of the antenna port in the horizontal dimension or the vertical dimension being 1.

It can be understood that when N₁ or N₂ is equal to 1 and the spacings between the antenna ports are the same, the first antenna array may be a uniform linear array; when N₁ and/or N₂ is greater than 1, and the spacings between the antenna ports are the same, the first antenna array may be a uniform planar array. The spacing of antenna ports in the horizontal dimension may be denoted as dₓ, and the spacing of antenna ports in the vertical dimension may be denoted as d_{z}. The length of the antenna array in the horizontal dimension may be denoted as Dₓ, where *Dₓ = N*₁*dₓ* or *Dₓ* = (*N*₁ -1)*dₓ,* or may be other expressions, which are not limited in the embodiments of the present disclosure. The length of the antenna array in the vertical dimension may be denoted as D_{z}, where *D_{z}* = N₂*d_{z}* or *D_{z}* = (*N*₂ -1)*d_{z},* or may be other expressions, which are not limited in the embodiments of the present disclosure.

In some embodiments, the terminal may determine whether the terminal itself is in the near-field region through a reference signal sent by the network device. For example, the terminal may receive a channel state information-reference signal (CSI-RS) sent by the network device, and the terminal may perform channel estimation through the CSI-RS to determine whether it is in the near-field region. For example, the terminal may determine the distance between the terminal and the first antenna array based on the CSI-RS, and then determine whether the terminal is in the near-field region. The reference signal may also be TRS, SSB, etc., which are not limited here.

In some embodiments, the terminal may determine whether the terminal itself is in the near-field region through a power parameter. In some embodiment, the power parameter is used for indicating an uplink sending power or a path loss (PL) of the terminal. For example, the terminal may determine whether it is in the near-field region based on the sending power of PRACH and/or MSG1. For example, in a RACH procedure, the UE determines that L1-RSRP is -100 dBm, determines that the SSB power is -12 dBm based on RRC reconfiguration, and calculates PL = 88 dB. In this case, the path loss threshold is *PL(i),* where i is affected by other parameters, such as the degree of interference, the frequency band in which the current communication is located, etc. When *PL > PL(i),* the terminal determines that the terminal itself is in the near-field region; otherwise, the terminal determines that the terminal itself is in the far-field region. As another example, in a RACH procedure, the sending power of the UE increases during the repetition process of MSG1 and MSG3. When the sending power of the UE exceeds the sending power threshold, the terminal determines that the terminal itself is in the near-field region; otherwise, the terminal determines that the terminal itself is in the far-field region. In some embodiments, the terminal threshold is similar to *PL(i),* and may not be a fixed value.

In some embodiments, the terminal may determine whether the terminal itself is in the near-field region through a distance parameter. The distance parameter is used for indicating the distance between the terminal and the network device or the first antenna array in the geographical environment; or the distance parameter is used for indicating whether the distance between the terminal and the network device or the first antenna array is less than or greater than the Rayleigh distance. The definition of the distance parameter may also refer to the description below, which will not be repeated here.

In some embodiments, the terminal being in the near-field region of the first antenna array may mean that the terminal is in the near-field region of the first antenna array in at least one of the horizontal dimension and the vertical dimension.

In some embodiments, determining, by the terminal, that it is in the near-field region of the first antenna array includes at least one of the following: determining, by the terminal, that the terminal is in the near-field region only in the horizontal dimension; determining, by the terminal, that the terminal is in the near-field region only in the vertical dimension; and determining, by the terminal, that the terminal is in the near-field region in both the horizontal dimension and the vertical dimension.

For example, if the distance between the terminal and the first antenna array in the horizontal dimension is less than or equal to $\frac{2 {D}_{z}^{2} {sin}^{2} φ}{λ}$, it may be determined that the terminal is in the near-field region in the horizontal dimension; when the first antenna array is a uniform linear array, if the distance between the terminal and the first antenna array in the horizontal dimension is less than or equal to $\frac{2 {D}_{x}^{2} {sin}^{2} θ}{λ}$, it may be determined that the terminal is in the near-field region in the horizontal dimension; when the first antenna array is a uniform planar array, if the distance between the terminal and the first antenna array in the horizontal dimension is less than or equal to $\frac{2 {D}_{x}^{2} {sin}^{2} α}{λ}$, it may be determined that the terminal is in the near-field region in the horizontal dimension.

In some embodiments, when the terminal determines that it is in the near-field region of the first antenna array, the terminal may determine that the currently used codebook is the near-field codebook. Optionally, the near-field codebook may include a plurality of codebooks, and at least one of the basis vectors in the horizontal dimension and the basis vectors in the vertical dimension of the plurality of codebooks is different. Optionally, the terminal may determine, based on its positional relationship with the first antenna array, the codebook that best matches the current state of the terminal from the far-field codebook and a plurality of near-field codebooks, and determine the best or most matching codeword from the codebook that best matches the current state of the terminal.

At step S2102, the terminal determines a candidate second basis vector.

In some embodiments, the candidate second basis vector is a basis vector used by the terminal in the near-field region and/or the far-field region. Optionally, the candidate second basis vector is used for signal transmission in the near-field region and/or the far-field region. Optionally, the candidate second basis vector may be used for the terminal to determine at least one of the near-field codebook and the far-field codebook.

In some embodiments, the candidate second basis vector is determined based on an angle parameter. Optionally, the number of the candidate second basis vector may be one or more. In some embodiments, different angle parameters may correspond to different candidate second basis vectors.

In some embodiments, the candidate second basis vector may be pre-stored or pre-configured in the terminal and the network device. In some embodiments, the candidate second basis vector is the same as the DFT basis vector in the DL Type I codebook. In some embodiments, the near-field codebook may be determined based on the DFT basis vector in the DL Type I codebook and the candidate first basis vector.

In some embodiments, the second basis vector may be any one of a plurality of candidate second basis vectors. In some embodiments, the plurality of candidate second basis vectors may be basis vectors in the near-field codebook or basis vectors in the far-field codebook. For example, for the far-field codebook and/or the near-field codebook, the terminal may pre-store a plurality of candidate second basis vectors, each candidate first basis vector corresponding to a different angle parameter. When the terminal determines that it is in the far-field region, it may determine the second basis vector from the plurality of candidate second basis vectors corresponding to the far-field codebook, or, when the terminal determines that it is in the near-field region, it may determine the second basis vector from the above plurality of candidate second basis vectors.

In some embodiments, the terminal determines the candidate second basis vector based on a measurement result of a reference signal. Optionally, the terminal determines, based on the measurement result, that the terminal is in the near-field region of the first antenna array, and determines an optimal second basis vector in the candidate second basis vectors. For example, determining, by the terminal, the second basis vector may include: determining, by the terminal, the candidate second basis vector corresponding to the best matching angle parameter, where the candidate second basis vector corresponding to the best matching angle parameter may be the second basis vector determined by the terminal.

In some embodiments, the best matching candidate second basis vector, i.e., the second basis vector or the best matching angle parameter, may be determined based on a preset algorithm, which is not limited in the embodiments of the present disclosure. In some embodiments, the angle parameter may be a set of possible values in the angle domain of the terminal relative to the first antenna array. For example, referring to FIG. 1B or FIG. 1C, the angle parameter may include any angle value in the angle domain of the horizontal dimension and any angle value in the angle domain of the vertical dimension. The angle domain of the horizontal dimension may include, for example, any possible value of cos *θ* or cos *θ* sin *φ,* and the angle domain of the vertical dimension may include, for example, any possible value of cos *φ*.

In some embodiments, the angle parameter includes at least one first angle parameter in the horizontal dimension and at least one second angle parameter in the vertical dimension. In some embodiments, the first angle parameter may be obtained by quantizing the angle domain of the horizontal dimension, and the second angle parameter may be obtained by quantizing the angle domain of the vertical dimension.

Optionally, the first angle parameter may be obtained by quantizing the angle domain of the horizontal dimension based on the number N₁ of the antenna port in the horizontal dimension and the oversampling factor O₁, and the number of the first angle parameter may be *N*₁*O*₁*.* Optionally, the second angle parameter may be obtained by quantizing the angle domain of the vertical dimension based on the number N₂ of the antenna port in the vertical dimension and the oversampling factor O₂, and the number of first angle parameters may be *N*₂*O*₂*.*

Optionally, the first angle parameter and the second angle parameter may also be obtained by quantization based on a pre-configured number of samples, and the value of the number of samples is not limited in the embodiments of the present disclosure.

In some embodiments, the terminal may determine the second basis vector regardless of whether it is in the far-field region or the near-field region, for example, the terminal determines the second basis vector based on a preset period or a preset trigger event.

In some embodiments, the candidate second basis vector includes a basis vector in the horizontal dimension and a basis vector in the vertical dimension, and the candidate second basis vector is a Kronecker product of the basis vector in the horizontal dimension and the basis vector in the vertical dimension that are in the candidate second basis vector.

For example, if the basis vector, in the horizontal dimension, in the candidate second basis vector is v' , and the basis vector, in the vertical dimension, in the candidate second basis vector is *u',* the candidate second basis vector may be represented as *v'*⊗*u'*.

In some embodiments, when the first antenna array is a uniform linear array, the basis vectors, in the vertical dimension, in the candidate second basis vector may all be 1, that is, the candidate second basis vector is the basis vector in the horizontal dimension.

For example, when the first antenna array is a uniform linear array, determining, by the terminal, the second basis vector may include: determining, by the terminal, the basis vector, in the horizontal dimension, corresponding to the best matching first angle parameter as the second basis vector.

In some embodiments, an ${n}_{1}^{′}$ -th element ${ν}_{{n}_{1}^{′}}^{′}$ of a basis vector *v*' , in the horizontal dimension, in the candidate second basis vector is: ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$ ; an ${n}_{2}^{′}$-th element ${u}_{{n}_{2}^{′}}^{′}$ of a basis vector *u',* in the vertical dimension, in the candidate second basis vector is: ${u}_{{n}_{2}^{′}}^{′} = exp \left(j\frac{2 π}{λ}⋅\frac{2 {mn}_{2}^{′} {d}_{z}}{{N}_{2} {O}_{2}}\right)$;
where ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$, ${n}_{2}^{′} = {n}_{2} + \left({N}_{2}+1\right) / 2$; *l* denotes the first angle parameter corresponding to the candidate second basis vector, m denotes the second angle parameter corresponding to the candidate second basis vector, *O*₁ denotes an oversampling factor of the angle parameter in the horizontal dimension, *O*₂ denotes an oversampling factor of the angle parameter in the vertical dimension, *l =* 0,1,···*,N*₁*O*₁ -1*,* and *m* = 0,1,···,*N*₂*O*₂ -1 ; *j* is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

It should be noted that when the first antenna array is a uniform linear array, the basis vector, in the vertical dimension, in each candidate second basis vector may be 1. Thus, the second angle parameter and the basis vector in the vertical dimension may be ignored. Moreover, when the first antenna array is a uniform linear array, only whether the terminal is in the near-field region in the horizontal dimension may be considered.

It can be understood that each candidate second basis vector may include a component in the horizontal dimension and a component in the vertical dimension. Based on the above formula, the candidate second basis vector corresponding to each first angle parameter and each second angle parameter can be determined, and then the near-field codebook and/or the far-field codebook can be constructed based on the candidate second basis vector corresponding to each first angle parameter and each second angle parameter.

In some embodiments, the candidate second basis vector may be referred to as a far-field basis vector, or other names, which are not limited in the embodiments of the present disclosure.

In some embodiments, the candidate second basis vector is used for single-polarized single-layer transmission; or the candidate second basis vector is used for dual-polarized multi-layer transmission, and the candidate second basis vector may be constructed based on the angle parameter and a co-phase coefficient, where the co-phase coefficient may correspond to the number of layers of the dual-polarized multi-layer transmission.

Optionally, the candidate second basis vector may be a codebook obtained by performing, based on the co-phase coefficient, multi-layer and dual-polarization processing on the DFT basis vector in the DL Type I codebook, or on the above candidate second basis vector for single-polarized single-layer transmission.

At step S2103, the terminal determines a candidate first basis vector.

In some embodiments, the candidate first basis vector is a basis vector used for the near-field region. Optionally, the candidate first basis vector is used for modifying the candidate second basis vector to obtain the near-field codebook. Optionally, the near-field codebook is determined based on the candidate first basis vector and the candidate second basis vector. Alternatively, the candidate first basis vector is used for determining the near-field codebook.

In some embodiments, the candidate first basis vector is determined based on a distance parameter. Optionally, the number of the candidate first basis vector may be one or more. In some embodiments, different distance parameters may correspond to different candidate first basis vectors.

It can be understood that, considering that the electromagnetic wave in the near-field region is a spherical-like wave rather than a plane wave in the far-field region, the candidate first basis vector may be determined based on the distance parameter, thereby introducing the influence of distance on the codeword, enabling the near-field codebook generated by introducing the candidate first basis vector to better conform to the characteristics of near-field transmission.

In some embodiments, the candidate first basis vector may be pre-stored or pre-configured in the terminal and the network device.

In some embodiments, the first basis vector may be any one of a plurality of candidate first basis vectors. For example, for the near-field codebook, the terminal may pre-store a plurality of candidate first basis vectors, each candidate first basis vector corresponding to a different distance parameter. When the terminal is in the near-field region, it may determine the first basis vector from the plurality of candidate first basis vectors corresponding to the near-field codebook.

The terminal may determine the candidate first basis vector in various ways, which are not limited here. Several ways of determining the first basis vector are exemplarily described below. In some embodiments, the terminal may determine the first basis vector based on a relative position. The relative position is used for indicating the relative position of the terminal and the first antenna array; further, the relative position includes the azimuth and/or elevation angle of the terminal and the first antenna array.

It can be understood that, considering that the radiation pattern changes with distance in the near-field region, considering the relative position in determining the first basis vector can improve the effectiveness of the codebook generated based on the candidate first basis vector.

In some embodiments, the terminal may determine the best matching candidate first basis vector based on a measurement result of a reference signal. Optionally, the terminal determines, based on the measurement result, that the terminal is in the near-field region of the first antenna array, and determines the candidate first basis vector corresponding to the best matching distance parameter as the first basis vector. Optionally, the terminal may traverse each candidate first basis vector in the near-field codebook and determine the best matching candidate first basis vector as the first basis vector, for example, the candidate first basis vector with the best communication quality.

Optionally, determining, by the terminal, the first basis vector may include: determining, by the terminal, the candidate first basis vector corresponding to the best matching distance parameter.

In some embodiments, the distance parameter may be a set of possible values in the distance domain of the terminal relative to the first antenna array. For example, referring to FIG. 1B or FIG. 1C, the distance parameter may include any distance value in the distance domain of the horizontal dimension and any distance value in the distance domain of the vertical dimension in the near-field region. The distance domain of the horizontal dimension may be, for example, less than or equal to any possible value of $\frac{2 {D}_{x}^{2} {sin}^{2} θ}{λ}$ or $\frac{2 {D}_{x}^{2} {sin}^{2} α}{λ}$, and the distance domain of the vertical dimension may be, for example, less than or equal to any possible value of $\frac{2 {D}_{z}^{2} {sin}^{2} φ}{λ}$.

In some embodiments, the distance parameter includes at least one first distance parameter in the horizontal dimension and at least one second distance parameter in the vertical dimension. In some embodiments, the first distance parameter may be obtained by quantizing the distance domain of the horizontal dimension, and the second distance parameter may be obtained by quantizing the distance domain of the vertical dimension.

Optionally, the first distance parameter may be obtained by quantizing the distance domain of the horizontal dimension based on the oversampling factor *O*₃ and the number of the sampling point N₃ in the horizontal dimension of the distance parameter, and the number of the first distance parameter may be N₃O₃. Optionally, the second distance parameter may be obtained by quantizing the distance domain of the vertical dimension based on the oversampling factor O₄ and the number of the sampling point N₄ in the vertical dimension, and the number of the first distance parameter may be N₄O₄.

Optionally, the first distance parameter and the second distance parameter may also be obtained by quantization based on a pre-configured number of samples, and the value of the number of samples is not limited in the embodiments of the present disclosure.

In some embodiments, the terminal may determine the second basis vector only when the terminal determines that it is in the near-field region, for example, when the terminal is in the near-field region, the terminal determines the first basis vector based on a preset period or a preset trigger event.

In some embodiments, the first basis vector includes a basis vector in the horizontal dimension and a basis vector in the vertical dimension, and the first basis vector is a Kronecker product of the basis vector in the horizontal dimension and the basis vector in the vertical dimension that are in the first basis vector.

For example, if the basis vector, in the horizontal dimension, in the first basis vector is *v*", and the basis vector, in the vertical dimension, in the first basis vector is *u*", the first basis vector may be represented as v" ⊗*u"*.

In some embodiments, when the first antenna array is a uniform linear array, the basis vector, in the vertical dimension, in the first basis vector may be 1, that is, the basis vector in the horizontal dimension of the first basis vector.

For example, the first antenna array is a uniform linear array, and determining, by the terminal, the first basis vector may include: determining, by the terminal, the candidate first basis vector in the horizontal dimension corresponding to the best matching first distance parameter as the first basis vector.

In some embodiments, when the terminal is in the near-field region only in either the horizontal dimension or the vertical dimension, the terminal may determine only one of the basis vector in the horizontal dimension or the basis vector in the vertical dimension in the first basis vector.

For example, if the terminal is in the near-field region only in the vertical dimension, the terminal may determine the basis vector in the vertical dimension corresponding to the best matching second distance parameter as the first basis vector.

In some embodiments, an ${n}_{1}^{′}$-th element ${ν}_{{n}_{1}^{′}}^{"}$ of a basis vector *v"* , in the horizontal dimension, in the candidate first basis vector is:
${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right) ;$
an ${n}_{2}^{′}$-th element ${u}_{{n}_{2}^{′}}^{"}$ of a basis vector *u"* , in the vertical dimension, in the candidate first basis vector is:
   ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right) ;$
where ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$, and ${n}_{2}^{′} = {n}_{2} + \left({N}_{2}+1\right) / 2$; *o*₁ denotes the first distance parameter corresponding to the candidate first basis vector, *o*₂ denotes the second distance parameter corresponding to the candidate first basis vector, *O*₃ denotes an oversampling factor of the distance parameter in the horizontal dimension, *O*₄ denotes an oversampling factor of the distance parameter in the vertical dimension, *o*₁ = 1,2,···,*N*₃*O*₃*,* and *o*₂ = 1,2,···,*N*₄*O*₄; and *j* is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

In some embodiments, ${D}_{x} = {N}_{1} {d}_{x} = {N}_{1} \frac{λ}{2}$, and ${D}_{z} = {N}_{2} {d}_{z} = {N}_{2} \frac{λ}{2}$, the ${n}_{1}^{′}$ -th element ${ν}_{{n}_{1}^{′}}^{"}$ of the basis vector, in the horizontal dimension, in the candidate first basis vector is: ${ν}_{{n}_{1}^{′}}^{"} = exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; and the ${n}_{2}^{′}$-th element ${u}_{{n}_{2}^{′}}^{"}$ of the basis vector, in the vertical dimension, in the candidate first basis vector is: ${u}_{{n}_{2}^{′}}^{"} = exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

It should be noted that when the first antenna array is a uniform linear array, the basis vector corresponding to the vertical dimension in the candidate first basis vector may be 1. Thus, the second distance parameter and the basis vector in the vertical dimension may be ignored. Moreover, when the first antenna array is a uniform linear array, only whether the terminal is in the near-field region in the horizontal dimension may be considered.

It can be understood that the candidate first basis vector may include a component in the horizontal dimension and a component in the vertical dimension. Based on the above formula, the candidate first basis vector corresponding to each first distance parameter and each second distance parameter can be determined, and then the near-field codebook can be constructed based on the candidate first basis vector corresponding to each first distance parameter and each second distance parameter.

In some embodiments, the candidate first basis vector may be referred to as a near-field correction basis vector, or other names, which are not limited in the embodiments of the present disclosure.

In some embodiments, the candidate first basis vector is used for single-polarized single-layer transmission; or the candidate first basis vector is used for dual-polarized multi-layer transmission, and the candidate first basis vector may be constructed based on the distance parameter and a co-phase coefficient, where the co-phase coefficient may correspond to the number of layers of the dual-polarized multi-layer transmission.

Optionally, the candidate first basis vector may be a codebook obtained by performing, based on the co-phase coefficient, multi-layer and dual-polarization processing on the above candidate first basis vector for single-polarized single-layer transmission.

At step S2104, the terminal determines a first codeword in the near-field codebook.

In some embodiments, the near-field codebook is determined based on the candidate first basis vector. Optionally, the near-field codebook is obtained by multiplying the candidate first basis vector and the candidate second basis vector. Optionally, the near-field codebook is obtained by modifying the candidate second basis vector with the candidate first basis vector.

For example, an ${n}_{1}^{′}$-th element ${ν}_{{n}_{1}^{′}}$ of the basis vector v , in the horizontal dimension, in the near-field codebook may be represented as ${ν}_{{n}_{1}^{′}} = {ν}_{{n}_{1}^{′}}^{′} \times {ν}_{{n}_{1}^{′}}^{"}$, where ${ν}_{{n}_{1}^{′}}^{′}$ denotes the ${n}_{1}^{′}$-th element of the basis vector, in the horizontal dimension, in the candidate second basis vector, and ${ν}_{{n}_{1}^{′}}^{"}$ denotes the ${n}_{1}^{′}$-th element of the basis vector, in the horizontal dimension, in the candidate first basis vector. An ${n}_{2}^{′}$-th element ${u}_{{n}_{2}^{′}}$ of the basis vector *u ,* in the vertical dimension, in the near-field codebook may be represented as ${u}_{{n}_{2}^{′}} = {u}_{{n}_{2}^{′}}^{′} \times {u}_{{n}_{2}^{′}}^{"}$ where ${u}_{{n}_{2}^{′}}^{′}$ denotes the ${n}_{2}^{′}$-th element of the basis vector, in the horizontal dimension, in the candidate second basis vector, and ${u}_{{n}_{2}^{′}}^{"}$ denotes the ${n}_{2}^{′}$-th element of the basis vector, in the horizontal dimension, in the candidate first basis vector.

In some embodiments, the near-field codebook may be pre-stored or pre-configured in the network device and the terminal.

In some embodiments, the terminal determines the first codeword in the near-field codebook based on a measurement result. Optionally, the terminal determines, based on the measurement result, that the terminal is in the near-field region of the first antenna array, and determines the first codeword in the near-field codebook. Optionally, the terminal may traverse each codeword in the near-field codebook and determine the best or best matching codeword in the near-field codebook as the first codeword.

In some embodiments, the first codeword is determined based on the first basis vector and the second basis vector determined by the terminal.

In some embodiments, after determining the second basis vector and the first basis vector, the terminal may multiply the first basis vector and the candidate second basis vector to obtain the first codeword, where the calculated first codeword is the codeword in the near-field codebook.

In some embodiments, the ${n}_{1}^{′}$-th element ${ν}_{{n}_{1}^{′}}$ of the basis vector v, in the horizontal dimension, in the near-field codebook is:
${ν}_{{n}_{1}^{′}} = exp \left(j\frac{2 π}{λ}⋅\frac{2 {ln}_{1}^{′} {d}_{x}}{{N}_{1} {O}_{1}}\right) \times exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right) ;$ and
the ${n}_{2}^{′}$-th element ${u}_{{n}_{2}^{′}}$ of the basis vector *u ,* in the vertical dimension, in the near-field codebook is:
   ${u}_{{n}_{2}^{′}} = exp \left(j\frac{2 π}{λ}⋅\frac{2 {mn}_{2}^{′} {d}_{z}}{{N}_{2} {O}_{2}}\right) \times exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right) .$
where ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$ and ${u}_{{n}_{2}^{′}}^{′} = exp \left(j\frac{2 π}{λ}⋅\frac{2 {mn}_{2}^{′} {d}_{z}}{{N}_{2} {O}_{2}}\right)$ may be the candidate second basis vector, and ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$ and ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)$ may be the candidate first basis vector, where the candidate first basis vector may be terms introduced when considering the near-field spherical wave.

In some embodiments, ${D}_{x} = {N}_{1} {d}_{x} = {N}_{1} \frac{λ}{2}$ and ${D}_{z} = {N}_{2} {d}_{z} = {N}_{2} \frac{λ}{2}$, the ${n}_{1}^{′}$ -th element ${ν}_{{n}_{1}^{′}}$ of the basis vector v, in the horizontal dimension, in the near-field codebook is: ${ν}_{{n}_{1}^{′}} = exp \left(\frac{j 2 {πln}_{1}^{′}}{{N}_{1} {O}_{1}}\right) \times exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; and the ${n}_{2}^{′}$-th element ${u}_{{n}_{2}^{′}}$ of the basis vector *u* , in the vertical dimension, in the near-field codebook is: ${u}_{{n}_{2}^{′}} = exp \left(\frac{j 2 {πmn}_{2}^{′}}{{N}_{2} {O}_{2}}\right) \times exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

It should be noted that when the first antenna array is a uniform linear array, the basis vector corresponding to the vertical dimension in the near-field codebook may be 1. Thus, the basis vector in the vertical dimension may be ignored. Moreover, when the first antenna array is a uniform linear array, only whether the terminal is in the near-field region in the horizontal dimension may be considered.

It can be understood that the codeword in the near-field codebook may include a component in the horizontal dimension and a component in the vertical dimension. Based on the above formula, the codewords corresponding to each first angle parameter, each second angle parameter, each first distance parameter, and each second distance parameter can be determined, and thus the near-field codebook can be obtained through construction.

It can be understood that the near-field codebook in the above embodiment may be a codebook used by the terminal when the terminal is in the near-field region in both the horizontal dimension and the vertical dimension, for example, it may be referred to as a third near-field codebook.

In some embodiments, the near-field codebook includes at least one of the following: a first near-field codebook, where the first near-field codebook is a codebook used by the terminal when the terminal is in the near-field region only in the horizontal dimension; a second near-field codebook, where the second near-field codebook is a codebook used by the terminal when the terminal is in the near-field region only in the vertical dimension; and a third near-field codebook, where the third near-field codebook is a codebook used by the terminal when the terminal is in the near-field region in both the horizontal dimension and the vertical dimension.

In some embodiments, the first near-field codebook may be determined based on the candidate second basis vector and the basis vector in the horizontal dimension of the candidate first basis vector. The second near-field codebook may be determined based on the candidate second basis vector and the basis vector in the vertical dimension of the candidate first basis vector. The third near-field codebook may be determined based on the candidate second basis vector, and the basis vector in the horizontal dimension and the basis vector in the vertical dimension of the candidate first basis vector.

That is, the candidate first basis vector may be introduced in only any one or two of the horizontal dimension and the vertical dimension to obtain a corresponding near-field codebook. For example, if the terminal is in the near-field region only in the horizontal dimension, the terminal may use the basis vector in the horizontal dimension of the candidate first basis vector to modify the basis vector in the horizontal dimension of the candidate second basis vector, thereby obtaining the first near-field codebook, and determining the first codeword based on this codebook.

In some embodiments, the terminal may determine the codebook that best matches its state from the far-field codebook, the first near-field codebook, the second near-field codebook, and the third near-field codebook. For example, if the terminal is in the near-field region only in the horizontal dimension, it may determine that the first near-field codebook is the currently used codebook.

For example, when the terminal is in the near-field region only in the horizontal dimension, the basis vector in the horizontal dimension of the near-field codebook used by the terminal (i.e., the first near-field codebook) may be represented as: ${ν}_{{n}_{1}^{′}} = exp \left(\frac{j 2 {πln}_{1}^{′}}{{N}_{1} {O}_{1}}\right) \times exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; the basis vector in the vertical dimension of the near-field codebook used by the terminal may be represented as: ${u}_{{n}_{2}^{′}} = exp \left(\frac{j 2 {πmn}_{2}^{′}}{{N}_{2} {O}_{2}}\right)$. That is, when the terminal is in the near-field region only in the horizontal dimension, it may traverse the values of *l* and m based on the above formula, thereby determining the optimal codeword, where the codeword may be the first codeword determined by the terminal this time.

In some embodiments, the near-field codebook is used for single-polarized single-layer transmission; or the near-field codebook is used for dual-polarized multi-layer transmission. Optionally, the near-field codebook may be constructed based on the candidate first basis vector, the candidate second basis vector, and a co-phase coefficient, or based on the angle parameter, the distance parameter, and a co-phase coefficient.

In some embodiments, in dual-polarized multi-layer transmission, in the case of QPSK, the co-phase coefficient may be any of the four values [1, -1, j, -j]; in the case ofBPSK, the co-phase coefficient may be any of [1, -1]; in the case of 8PSK, the co-phase coefficient may be any of the eight values $\left[1,-1,j,-j,\frac{1}{\sqrt{2}}\left(1+j\right),\frac{1}{\sqrt{2}}\left(1-j\right),\frac{1}{\sqrt{2}}\left(-1+j\right),\frac{1}{\sqrt{2}}\left(-1-j\right)\right]$. Optionally, the near-field codebook may include codewords constructed based on each angle parameter, each distance parameter, and each co-phase coefficient.

Optionally, the near-field codebook may be a codebook obtained by performing, based on the co-phase coefficient, multi-layer and dual-polarization processing on the near-field codebook for single-polarized single-layer transmission in the above optional embodiments.

At step S2105, the terminal determines that a switching between the far-field region and the near-field region occurs, and sends third information to the network device.

Step S2105 is an optional step. In some embodiments, the terminal may send the third information to the network device to indicate whether the switching between the far-field region and the near-field region occurs. In other embodiments, the network device may determine whether the switching between the far-field region and the near-field region occurs to the terminal, and whether the relative angle between the terminal and the network device is changed, etc., in other manners, which are not limited in the embodiments of the present disclosure.

It can be understood that the far-field region may refer to a region where the terminal is relatively far from the antenna array. For example, when the distance between the terminal and the first antenna array in the horizontal dimension and/or the vertical dimension is greater than or equal to the Rayleigh distance, it may be determined that the terminal is in the far-field region of the first antenna array.

In some embodiments, the terminal may continuously receive CSI-RS sent by the network device, and the terminal may perform channel estimation through the CSI-RS to determine whether the terminal switches from the near-field region to the far-field region, or from the far-field region to the near-field region. For example, the terminal may determine the distance to the first antenna array based on the CSI-RS, and then determine whether the terminal is in the far-field region.

In some embodiments, switching, by the terminal, to the far-field region of the first antenna array may mean that the terminal switches from the near-field region of the first antenna array to the far-field region in at least one of the horizontal dimension and the vertical dimension; and switching, by the terminal, to the near-field region of the first antenna array may mean that the terminal switches from the far-field region of the first antenna array to the near-field region in at least one of the horizontal dimension and the vertical dimension.

In some embodiments, determining, by the terminal, that the switching between the far-field region and the near-field region occurs includes at least one of the following: determining, by the terminal, that the terminal switches from the near-field region to the far-field region in the horizontal dimension; determining, by the terminal, that the terminal switches from the near-field region to the far-field region in the vertical dimension; determining, by the terminal, that the terminal switches from the near-field region to the far-field region in both the horizontal dimension and the vertical dimension; determining, by the terminal, that the terminal switches from the far-field region to the near-field region in the horizontal dimension; determining, by the terminal, that the terminal switches from the far-field region to the near-field region in the vertical dimension; and determining, by the terminal, that the terminal switches from the far-field region to the near-field region in both the horizontal dimension and the vertical dimension.

In some embodiments, the third information is used for indicating whether the second basis vector is changed. Optionally, the third information is used for indicating whether the best matching angle parameter has changed. Alternatively, the third information is used for indicating that the terminal has switched between the far-field region and the near-field region; or the third information is used for indicating whether the terminal is currently in the far-field region or the near-field region; or the third information is used for indicating the currently used codebook, for example, the codebook currently used by the terminal may be any one of the first near-field codebook, the second near-field codebook, the third near-field codebook, and the far-field codebook.

In some embodiments, the second basis vector being changed may mean that the relevant parameter of the candidate second basis vector best matching the terminal currently is changed, for example, the first angle parameter and/or the second angle parameter corresponding to the second basis vector determined by the terminal this time is changed.

In some embodiments, regardless of whether the terminal is in the near-field region, the terminal may continuously perform step S2102, for example, based on a preset period or based on a trigger event, perform step S2102 multiple times to determine the second basis vector corresponding to the terminal at different time points.

It can be understood that before and after the terminal switches, the terminal may determine the corresponding second basis vector (i.e., the far-field codeword) respectively. The terminal may compare the second basis vector determined this time with the second basis vector determined last time, and determine that the third information is used for indicating that the second basis vector is changed, or that the second basis vector is not changed.

In some embodiments, if the terminal determines that the second basis vector is not changed, the terminal may send to the network device the third information used for indicating that the second basis vector is not changed; if the terminal determines that the second basis vector is changed, the terminal may send to the network device the third information used for indicating that the second basis vector is changed.

In some embodiments, if the terminal determines that it is in the near-field region and the second basis vector is not changed, it may determine that the first information sent to the network device in step S2106 may not include information related to the first angle parameter and the second angle parameter, for example, the first information may not include the first indication field and the second indication field.

In some embodiments, the network device receives the third information. Optionally, the network device determines, based on the third information, whether the third codeword is changed.

In some embodiments, the network device determines that the second basis vector is changed, and expects to receive the candidate second basis vector related parameter in the first information. In some embodiments, the network device determines that the third codeword is not changed, and does not expect to receive the candidate second basis vector related parameter in the first information.

In some embodiments, the candidate second basis vector related parameter may include the first indication field and the second indication field, or the first angle parameter and the second angle parameter.

For example, the terminal continuously receives CSI-RS and performs channel estimation, and when determining that the terminal switches from the far-field region to the near-field region, the terminal may traverse the candidate second basis vectors corresponding to the angle parameters to determine the current second basis vector, and compare it with the second basis vector determined last time. If the terminal determines that the second basis vectors determined last time and this time are the same, the terminal may send to the network device the third information used for indicating that the second basis vector is not changed, for example, the third information with an indication field value of 0. After receiving the third information, the network device may determine that the current second basis vector of the terminal is the candidate second basis vector previously reported by the terminal, and then the network device may determine the near-field codeword currently corresponding to the terminal based on the candidate second basis vector and the information related to the first basis vector indicated in step S2106, and precode the data in the data stream.

Alternatively, when the terminal determines that it switches from the near-field region to the far-field region, the terminal may traverse the candidate second basis vectors corresponding to the angle parameters to determine the current second basis vector, and compare it with the second basis vector determined last time. If the terminal determines that the second basis vectors determined last time and this time are different, the terminal may send the third information with an indication field value of 1 to the network device. After receiving the third information, the network device may further receive information reported by the terminal and determine the current second basis vector of the terminal based on the information reported by the terminal, and then precode the data in the data stream based on the candidate second basis vector.

At step S2106, the terminal sends first information to the network device.

Step S2106 is an optional step. When the terminal needs to indicate the codeword, the terminal may send the first information to the network device to indicate the codeword. In some embodiments, the network device may indicate, through a reference signal such as DM-RS, the codeword selected by the network device for the terminal. Whether the terminal needs to indicate the codeword may be related to the transmission mode, which is not limited here.

In some embodiments, the first information is used for indicating the codeword determined by the terminal. Optionally, when the terminal is in the near-field region, the first information is used for indicating the first codeword. Optionally, the first information is used for indicating an angle parameter and/or a distance parameter corresponding to the first codeword. Optionally, the first information is used for indicating the candidate second basis vector and the first basis vector determined by the terminal.

In some embodiments, the distance parameter corresponding to the first codeword may be the distance parameter corresponding to the first basis vector determined by the terminal. The angle parameter corresponding to the first codeword may be the angle parameter corresponding to the second basis vector determined by the terminal.

In some embodiments, the first information includes at least one of the following: a first indication field, where the first indication field is used for indicating a first angle parameter corresponding to the first codeword; a second indication field, where the second indication field is used for indicating a second angle parameter corresponding to the first codeword; a third indication field, where the third indication field is used for indicating a first distance parameter corresponding to the first codeword; and a fourth indication field, where the fourth indication field is used for indicating a second distance parameter corresponding to the first codeword.

It can be understood that the first codeword may be determined based on the first basis vector and the second basis vector. The first angle parameter corresponding to the first codeword is also the first angle parameter corresponding to the second basis vector. The second angle parameter corresponding to the first codeword is also the second angle parameter corresponding to the second basis vector. The first distance parameter corresponding to the first codeword is also the first distance parameter corresponding to the first basis vector. The second distance parameter corresponding to the first codeword is also the second distance parameter corresponding to the first basis vector.

In some embodiments, the first indication field at least includes $\left⌈{log}_{2} {N}_{1}{O}_{1}\right⌉$ bits; the second indication field at least includes $\left⌈{log}_{2}{N}_{2}{O}_{2}\right⌉$ bits; the third indication field at least includes $\left⌈{log}_{2}{N}_{3}{O}_{3}\right⌉$ bits; and the fourth indication field at least includes $\left⌈{log}_{2} {N}_{4}{O}_{4}\right⌉$ bits.

For example, if the number of angle parameters in the horizontal dimension and the vertical dimension of the near-field codebook is *N*₁*O*₁ = *N*₂*O*₂ = 4 , and the number of distance parameters in the horizontal dimension and the vertical dimension of the near-field codebook is *N*₃*O*₃ *= N*₄*O*₄ = 4 , the first indication field, the second indication field, the third indication field, and the fourth indication field may each include 2 bits. When the first indication field is 00, the second indication field is 01, the third indication field is 10, and the fourth indication field is 11, the first codeword indicated by the first information is the codeword with the first angle parameter of 0, the second angle parameter of 1, the first distance parameter of 3, and the second distance parameter of 4.

It can be understood that when the first antenna array is a uniform linear array, the terminal may not need to feed back a parameter related to the vertical dimension. For example, the first information may only include a parameter related to the horizontal dimension, for example, the first information may only include the first indication field and the third indication field. When the terminal is in the near-field region only in one of the horizontal dimension or the vertical dimension, the terminal may only feed back a parameter, in the first basis vector, related to the dimension in which the terminal is in the near-field region. For example, if the first antenna array is a uniform planar array, and the terminal is in the near-field region only in the horizontal dimension, the terminal may determine that the first information includes the first indication field, the second indication field, and the third indication field.

In some embodiments, the network device receives the first information. Optionally, the network device determines the first codeword based on the first information. Optionally, the network device determines, based on the first information, the first basis vector and the candidate second basis vector determined by the terminal, and determines the first codeword based on the first basis vector and the second basis vector.

In some embodiments, the network device determines, based on the first angle parameter and the second angle parameter indicated by the first information, the second basis vector determined by the terminal, and determines, based on the first distance parameter and the second distance parameter indicated by the first information, the first basis vector determined by the terminal, and further determines the first codeword based on the first basis vector and the second basis vector.

For example, if the first antenna array is a uniform linear array, and the terminal determines that it switches from the far-field region to the near-field region, and the second basis vector is not changed, the terminal may send first information including only the first indication field to the network device. After receiving the first information, the network device may determine the first codeword based on the first distance parameter and the first angle parameter fed back by the terminal last time, where the first distance parameter may be indicated by the first indication field.

In some embodiments, the first information may be "codeword feedback information", "codeword indication information", etc., and the name is not limited in the embodiments of the present disclosure.

At step S2107, the terminal sends second information to the network device.

Step S2107 is an optional step. When the terminal needs to indicate a co-phase coefficient, the terminal may send the second information to the network device to indicate the co-phase coefficient. In some embodiments, the network device may indicate, through a reference signal such as DM-RS, the co-phase coefficient selected by the network device for the terminal. Whether the terminal needs to indicate the co-phase coefficient may be related to the transmission mode, which is not limited here. Alternatively, the network device may determine the co-phase coefficient based on the angle parameter.

In some embodiments, the second information is used for indicating a co-phase coefficient corresponding to the first codeword. Optionally, the co-phase coefficient is a co-phase coefficient corresponding to the near-field codebook. Optionally, the near-field codebook is used for dual-polarized multi-layer transmission.

In some embodiments, the second information is used for indicating that the first codeword is used for dual-polarized multi-layer transmission. Optionally, the second information is used for indicating the co-phase coefficient corresponding to the first codeword.

In some embodiments, the second information may include N bits. For example, when N is 1, the second information is used for indicating BPSK; when N is 2, the second information is used for indicating QPSK; when N is 3, the second information is used for indicating 8-PSK.

It can be understood that in the case of QPSK, the co-phase coefficient may be any of the four values [1, -1, j, -j], and may be indicated by 2 bits; in the case of BPSK, the co-phase coefficient may be any of [1, -1], and may be indicated by 1 bit; in the case of 8PSK, the co-phase coefficient may be any of the eight values $\left[1,-1,j,-j,\frac{1}{\sqrt{2}}\left(1+j\right),\frac{1}{\sqrt{2}}\left(1-j\right),\frac{1}{\sqrt{2}}\left(-1+j\right),\frac{1}{\sqrt{2}}\left(-1-j\right)\right]$, and may be indicated by 3 bits.

For example, in the case where the second information includes 1 bit, when the bit value is 1, the co-phase coefficient corresponding to the first codeword may be 1; when the bit value is 0, the co-phase coefficient corresponding to the first codeword may be -1.

In some embodiments, the network device receives the second information. Optionally, the network device determines, based on the second information, the number of layers for dual-polarized multi-layer transmission of the codebook corresponding to the first codeword. Optionally, the network device determines the first codeword based on the first information and the second information.

For example, the network device determines, based on the first information, the angle parameter and the distance parameter corresponding to the first codeword; the network device may also determine, based on the second information, the co-phase coefficient corresponding to the codebook corresponding to the first codeword; the network device may then determine, based on the angle parameter, the distance parameter and the co-phase coefficient, the codebook and the corresponding codeword that provide the best communication quality for the terminal, and this codeword is the first codeword determined by the terminal.

In some embodiments, the second information may be "co-phase coefficient indication information", "transmission type indication information", etc., and the name of the second information is not limited in the embodiments of the present disclosure.

In the embodiments of the present disclosure, the third information, the first information and the second information may be carried by the same signaling or information element, for example, different fields in the same information, and the information may be, for example, a UCI. Optionally, the first information and the second information may also be different information, for example, carried by different signaling or information elements. This is not limited in the embodiments of the present disclosure.

In combination with some of the above embodiments, in an example, the first antenna array is a uniform planar array. When the terminal determines that it switches to the near-field region in both the horizontal dimension and the vertical dimension, the terminal may perform channel estimation based on CSI-RS to determine the first basis vector and the second basis vector. Specifically, the terminal may determine the best matching first angle parameter, second angle parameter, first distance parameter, and second distance parameter, and may determine whether the second basis vector determined this time is the same as the best matching candidate second basis vector determined before switching to the near-field region, and send corresponding third information. If the second basis vector determined this time is the same as the candidate second basis vector determined before switching to the near-field region, the terminal may determine that the first information only includes the third indication field and the fourth indication field, where the third indication field is used for indicating the best matching first distance parameter determined by the terminal, and the fourth indication field is used for indicating the best matching second distance parameter determined by the terminal.

After receiving the third information, the network device may determine that the second basis vector of the terminal is not changed, and determine, based on the first information, the best matching first distance parameter and the best matching second distance parameter determined by the terminal, and then determine the first basis vector of the terminal. Further, the network device may determine, based on the candidate second basis vector reported by the terminal last time and the first basis vector determined based on the first information, the first codeword determined by the terminal, and transmit wireless signals based on the first codeword.

In some embodiments, the names of information, etc., are not limited to the names recited in the embodiments. Terms such as "information", "message", "signal", "signaling", "report", "configuration", "indication", "instruction", "command", "channel", "parameter", "domain", "field", "symbol", "code element (symbol)", "codebook", "codeword", "codepoint", "bit", "data", "program", "chip" may be interchanged.

In some embodiments, terms such as "codebook", "codeword", and "precoding matrix" may be interchanged. For example, a codebook may be a collection of one or more codewords/precoding matrices.

In some embodiments, terms such as "up", "uplink", and "physical uplink" may be interchanged; terms such as "down", "downlink", and "physical downlink" may be interchanged; terms such as "side", "sidelink", "side communication", "sidelink communication", "direct connection", "direct connection link", "direct connection communication", and "direct connection link communication" may be interchanged.

In some embodiments, terms such as "downlink control information (DCI)", "downlink (DL) assignment", "DL DCI", "uplink (UL) grant", "UL DCI" may be interchanged.

In some embodiments, terms such as "physical downlink shared channel (PDSCH)", "DL data" may be interchanged, and terms such as "physical uplink shared channel (PUSCH)", "UL data" may be interchanged.

In some embodiments, terms such as "timepoint", "time point", "time", "time position" may be interchanged, and terms such as "duration", "time period", "time window", "window", "time" may be interchanged.

In some embodiments, terms such as "wireless access scheme" and "waveform" may be interchanged.

In some embodiments, terms such as "precoding", "precoder", "weight", "precoding weight", "spatial domain filter", "phase rotation", "antenna port", "layer", "the number of layers", and "rank" may be used.

In some embodiments, terms such as "frame", "radio frame", "subframe", "slot", "sub-slot", "mini-slot", "symbol", and "transmission time interval (TTI)" may be interchanged.

In some embodiments, terms such as "obtain", "acquire", "get", "receive", "transmit", "bidirectional transmission", "sending and/or receiving" may be interchanged, and may be interpreted as receiving from another entity, obtaining from a protocol, obtaining from a higher layer, obtaining through self-processing, self-implementing, etc.

In some embodiments, terms such as "send", "emit", "report", "issue", "transmit", "bidirectional transmission", "sending and/or receiving" may be interchanged.

In some embodiments, terms such as "certain", "preset", "predefined", "set", "indicated", "one", "any", "first" may be interchanged. "Certain A", "preset A", "predefined A", "set A", "indicated A", "one A", "any A", "first A" may be interpreted as A pre-specified in a protocol, etc., or as A obtained through setting, configuration, or indication, or as a specific A, an A, any A, or first A, etc., but are not limited thereto.

In some embodiments, determination or judgment may be performed by a value represented by 1 bit (0 or 1), or by a true or false value (Boolean value) represented by true or false, or by comparison of numerical values (e.g., comparison with a preset value), but is not limited thereto.

In some embodiments, "not expecting to receive" may be interpreted as not receiving on time resources and/or frequency resources, or as not performing subsequent processing on received data, etc.; "not expecting to send" may be interpreted as not sending, or as sending but not expecting the receiver to respond to the sent content.

The communication method involved in the embodiments of the present disclosure may include at least one of steps S2101 to S2107. For example, step S2103 may be implemented as an independent embodiment, step S2104 may be implemented as an independent embodiment, step S2105 may be implemented as an independent embodiment, step S2101 and step S2104 may be implemented as an independent embodiment, and step S2104, step S2105, and step S2106 may be implemented as an independent embodiment, but are not limited thereto.

In some embodiments, the orders of step S2102 and step S2103 may be exchanged, or step S2102 and step S2103 may be performed simultaneously. The orders of step S2105, step S2106, and step S2107 may be exchanged, or step S2105, step S2106, and step S2107 may be performed simultaneously.

In some embodiments, steps S2101 to S2103 and steps S2105 to S2107 are optional, and one or more of these steps may be omitted or replaced in different embodiments.

In some embodiments, steps S2101 to S2104 and steps S2106 to S2107 are optional, and one or more of these steps may be omitted or replaced in different embodiments.

In some embodiments, steps S2101 to S2105 and step S2107 are optional, and one or more of these steps may be omitted or replaced in different embodiments.

In some embodiments, reference may be made to other optional implementations described before or after the description corresponding to FIG. 2.

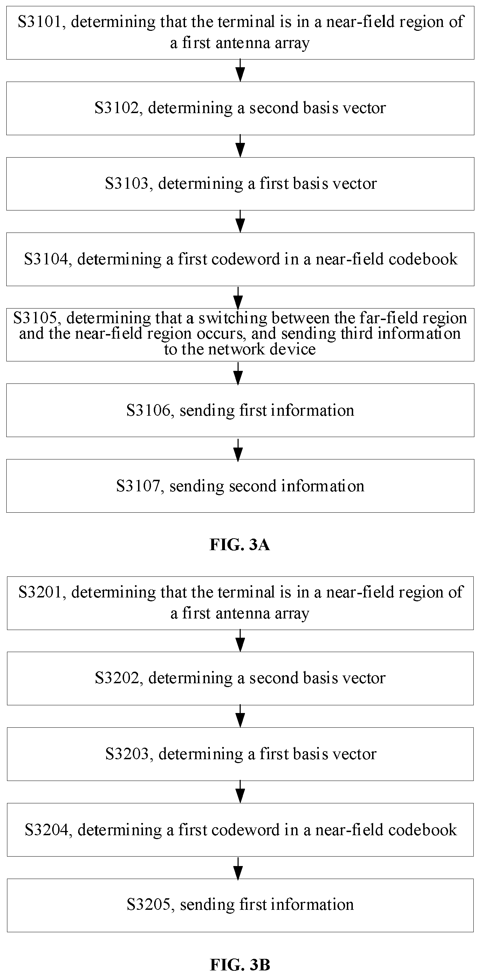

FIG. 3A is a schematic flowchart of a communication method illustrated according to an embodiment of the present disclosure. As shown in FIG. 3A, the embodiment of the present disclosure relates to a communication method (terminal side), and the method includes the following steps S3101 to S3107.

At step S3101, the terminal determines that it is in a near-field region of a first antenna array.

Optional implementations of step S3101 may refer to optional implementations of step S2101 in FIG. 2 and other related parts in the embodiments involved in FIG. 2, which will not be repeated here.

At step S3102, a second basis vector is determined.

Optional implementations of step S3102 may refer to optional implementations of step S2102 in FIG. 2 and other related parts in the embodiments involved in FIG. 2, which will not be repeated here.

At step S3103, a first basis vector is determined.

Optional implementations of step S3103 may refer to optional implementations of step S2103 in FIG. 2 and other related parts in the embodiments involved in FIG. 2, which will not be repeated here.

At step S3104, a first codeword in a near-field codebook is determined.

Optional implementations of step S3104 may refer to optional implementations of step S2104 in FIG. 2 and other related parts in the embodiments involved in FIG. 2, which will not be repeated here.

At step S3105, the terminal determines that a switching between a far-field region and the near-field region occurs, and sends third information to the network device.

Optional implementations of step S3105 may refer to optional implementations of step S2105 in FIG. 2 and other related parts in the embodiments involved in FIG. 2, which will not be repeated here.

In some embodiments, the terminal sends the third information to the network device, but is not limited thereto, and may also send the third information to other entities.

At step S3106, first information is sent.

Optional implementations of step S3106 may refer to optional implementations of step S2106 in FIG. 2 and other related parts in the embodiments involved in FIG. 2, which will not be repeated here.

In some embodiments, the terminal sends the first information to the network device, but is not limited thereto, and may also send the first information to other entities.

At step S3107, second information, is sent.

Optional implementations of step S3107 may refer to optional implementations of step S2107 in FIG. 2 and other related parts in the embodiments involved in FIG. 2, which will not be repeated here.

In some embodiments, the terminal sends the second information to the network device, but is not limited thereto, and may also send the second information to other entities.

The communication method involved in the embodiments of the present disclosure may include at least one of steps S3101 to S3107. For example, step S3103 may be implemented as an independent embodiment, step S3104 may be implemented as an independent embodiment, step S3105 may be implemented as an independent embodiment, step S3101 and step S3104 may be implemented as an independent embodiment, and step S3104, step S3105, and step S3106 may be implemented as an independent embodiment, but are not limited thereto.

In some embodiments, the orders of step S3102 and step S3103 may be exchanged, or step S3102 and step S3103 may be performed simultaneously. The orders of step S3105, step S3106, and step S3107 may be exchanged, or step S3105, step S3106, and step S3107 may be performed simultaneously.

In some embodiments, steps S3101 to S3103 and steps S3105 to S3107 are optional, and one or more of these steps may be omitted or replaced in different embodiments.

In some embodiments, steps S3101 to S3104 and steps S3106 to S3107 are optional, and one or more of these steps may be omitted or replaced in different embodiments.

In some embodiments, steps S3101 to S3105 and step S3107 are optional, and one or more of these steps may be omitted or replaced in different embodiments.

FIG. 3B is a schematic flowchart of a communication method illustrated according to an embodiment of the present disclosure. As shown in FIG. 3B, the embodiment of the present disclosure relates to a communication method (terminal side), and the method includes the following steps 3201 to S3205.

At step S3201, the terminal determines that it is in a near-field region of a first antenna array.

Optional implementations of step S3201 may refer to optional implementations of step S2101 in FIG. 2 and step S3101 in FIG. 3A, and other related parts in the embodiments involved in FIG. 2 and FIG. 3A, which will not be repeated here.

At step S3202, a second basis vector is determined.

Optional implementations of step S3202 may refer to optional implementations of step S2102 in FIG. 2 and step S3102 in FIG. 3A, and other related parts in the embodiments involved in FIG. 2 and FIG. 3A, which will not be repeated here.

At step S3203, a first basis vector is determined.

Optional implementations of step S3203 may refer to optional implementations of step S2103 in FIG. 2 and step S3103 in FIG. 3A, and other related parts in the embodiments involved in FIG. 2 and FIG. 3A, which will not be repeated here.

At step S3204, a first codeword in a near-field codebook is determined.

Optional implementations of step S3204 may refer to step S2104 in FIG. 2, optional implementations of step S3104 in FIG. 3A, and other related parts in the embodiments involved in FIG. 2 and FIG. 3A, which will not be repeated here.

At step S3205, first information is sent.

Optional implementations of step S3205 may refer to optional implementations of step S2106 in FIG. 2 and step S3106 in FIG. 3A, and other related parts in the embodiments involved in FIG. 2 and FIG. 3A, which will not be repeated here.

The communication method involved in the embodiments of the present disclosure may include at least one of steps S3201 to S3205. For example, step S3203 may be implemented as an independent embodiment, step S3204 may be implemented as an independent embodiment, step S3205 may be implemented as an independent embodiment, step S3201 and step S3204 may be implemented as an independent embodiment, and step S3204 and step S3205 may be implemented as an independent embodiment, but are not limited thereto.

In some embodiments, the orders of step S3202 and step S3203 may be exchanged, or step S3202 and step S3203 may be performed simultaneously.

In some embodiments, steps S3201 to S3203 and step S3205 are optional, and one or more of these steps may be omitted or replaced in different embodiments.

In some embodiments, steps S3201 to S3204 are optional, and one or more of these steps may be omitted or replaced in different embodiments.

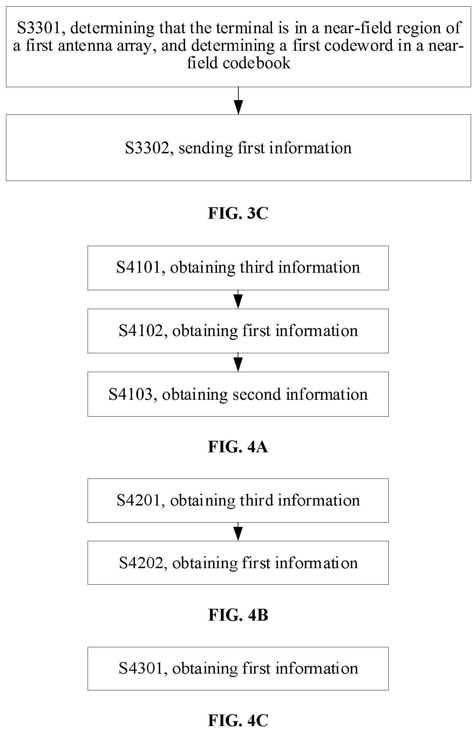

FIG. 3C is a schematic flowchart of a communication method illustrated according to an embodiment of the present disclosure. As shown in FIG. 3C, the embodiment of the present disclosure relates to a communication method (terminal side), and the method includes the following steps S3301 to S3302.

At step S3301, the terminal determines that it is in a near-field region of a first antenna array, and determines a first codeword in a near-field codebook.

Optional implementations of step S3301 may refer to optional implementations of step S2102 and step S2104 in FIG. 2, step S3101 and step S3104 in FIG. 3A, and step S3201 and step S3204 in FIG. 3B, and other related parts in the embodiments involved in FIG. 2, FIG. 3A, and FIG. 3B, which will not be repeated here.

At step S3302, first information is sent.

Optional implementations of step S3302 may refer to optional implementations of step S2106 in FIG. 2, step S3106 in FIG. 3A, step S3302 in FIG. 3B, and other related parts in the embodiments involved in FIG. 2, FIG. 3A, and FIG. 3B, which will not be repeated here.

The communication method involved in the embodiments of the present disclosure may include at least one of steps S3301 to S3302. For example, step S3301 may be implemented as an independent embodiment, and step S3302 may be implemented as an independent embodiment.

In some embodiments, the terminal determines that it is in a near-field region, and determines a first codeword in a near-field codebook, where the near-field codebook is determined based on a candidate first basis vector, and the candidate first basis vector is a basis vector used for the near-field region;
the terminal sends first information to a network device, where the first information is used for indicating the first codeword.

In some embodiments, the near-field codebook is determined based on the candidate first basis vector and a candidate second basis vector, and the candidate second basis vector is a basis vector of a codebook used by the terminal in a far-field region.

In some embodiments, the candidate first basis vector includes a basis vector in a horizontal dimension and a basis vector in a vertical dimension, and the candidate first basis vector is a Kronecker product of the basis vector in the horizontal dimension and the basis vector in the vertical dimension that are in the candidate first basis vector; and the candidate second basis vector includes a basis vector in the horizontal dimension and a basis vector in the vertical dimension, and the candidate second basis vector is a Kronecker product of the basis vector in the horizontal dimension and the basis vector in the vertical dimension that are in the candidate second basis vector.

In some embodiments, the first antenna array of the network device is any one of: a uniform linear array; and a uniform planar array.

In some embodiments, a number of an antenna port, in a horizontal dimension, of a first antenna array of the network device is N₁, and a number of an antenna port, in a vertical dimension, of the first antenna array of the network device is N₂, where N₁ is greater than or equal to 1, and N₂ is greater than or equal to 1.

In some embodiments, the candidate first basis vector is determined based on a distance parameter, and the distance parameter includes at least one first distance parameter in the horizontal dimension and at least one second distance parameter in the vertical dimension, an ${n}_{1}^{′}$-th element ${ν}_{{n}_{1}^{′}}^{"}$ of a basis vector v", in the horizontal dimension, in the candidate first basis vector is: ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$; and an ${n}_{2}^{′}$-th element ${u}_{{n}_{2}^{′}}^{"}$ of a basis vector *u"*, in the vertical dimension, in the candidate first basis vector is: ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)$; where ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$*,* and ${n}_{2}^{′} = {n}_{2} + \left({N}_{2}+1\right) / 2$; *o*₁ denotes the first distance parameter corresponding to the candidate first basis vector, *o*₂ denotes the second distance parameter corresponding to the candidate first basis vector, *O*₃ denotes an oversampling factor of the distance parameter in the horizontal dimension, *O*₄ denotes an oversampling factor of the distance parameter in the vertical dimension, *o*₁ = 1,2, ··· , *N*₃*O*₃, and *o*₂ = 1,2, ··· , *N*₄*O*₄; and *j* is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

In some embodiments, ${D}_{x} = {N}_{1} {d}_{x} = {N}_{1} \frac{λ}{2}$, and ${D}_{z} = {N}_{2} {d}_{z} = {N}_{2} \frac{λ}{2}$, the ${n}_{1}^{′}$-th element ${ν}_{{n}_{1}^{′}}^{"}$ of the basis vector *v*", in the horizontal dimension, in the candidate first basis vector is: ${ν}_{{n}_{1}^{′}}^{"} = exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; and the ${n}_{2}^{′}$-th element ${u}_{{n}_{2}^{′}}^{"}$ of the basis vector *u"*, in the vertical dimension, in the candidate first basis vector is: ${u}_{{n}_{2}^{′}}^{"} = exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

In some embodiments, the candidate second basis vector is determined based on an angle parameter, the angle parameter includes at least one first angle parameter in the horizontal dimension and at least one second angle parameter in the vertical dimension, an ${n}_{1}^{′}$ -th element ${ν}_{{n}_{1}^{′}}^{′}$ of a basis vector *v*', in the horizontal dimension, in the candidate second basis vector is: ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$; and an ${n}_{2}^{′}$-th element ${u}_{{n}_{2}^{′}}^{′}$ of a basis vector *u',* in the vertical dimension, in the candidate second basis vector is: ${u}_{{n}_{2}^{′}}^{′} = exp \left(j\frac{2 π}{λ}⋅\frac{2 {mn}_{2}^{′} {d}_{z}}{{N}_{2} {O}_{2}}\right)$; where *l* denotes the first angle parameter corresponding to the candidate second basis vector, m denotes the second angle parameter corresponding to the candidate second basis vector, *O*₁ denotes an oversampling factor of the angle parameter in the horizontal dimension, *O*₂ denotes an oversampling factor of the angle parameter in the vertical dimension, *l* = 0,1, ··· *, N*₁*O*₁ - 1, and m = 0,1,··*· , N*₂*O*₂ - 1.

In some embodiments, the first information includes at least one of the following: a first indication field, where the first indication field is used for indicating a first angle parameter corresponding to the first codeword; a second indication field, where the second indication field is used for indicating a second angle parameter corresponding to the first codeword; a third indication field, where the third indication field is used for indicating a first distance parameter corresponding to the first codeword; and a fourth indication field, where the fourth indication field is used for indicating a second distance parameter corresponding to the first codeword.

In some embodiments, the first indication field at least includes $\left⌈{log}_{2} {N}_{1}{O}_{1}\right⌉$ bits; the second indication field at least includes $\left⌈{log}_{2}{N}_{2}{O}_{2}\right⌉$ bits; the third indication field at least includes $\left⌈{log}_{2}{N}_{3}{O}_{3}\right⌉$ bits; and the fourth indication field at least includes $\left⌈{log}_{2} {N}_{4}{O}_{4}\right⌉$ bits.

In some embodiments, the candidate second basis vector is the same as a DFT basis vector in a DL Type I codebook.

In some embodiments, , determining, by the terminal, that the terminal is in the near-field region includes at least one of the following: determining, by the terminal, that the terminal is in the near-field region only in a horizontal dimension; determining, by the terminal, that the terminal is in the near-field region only in a vertical dimension; and determining, by the terminal, that the terminal is in the near-field region in both the horizontal dimension and the vertical dimension.

In some embodiments, the near-field codebook includes at least one of the following: a first near-field codebook, where the first near-field codebook is a codebook used by the terminal when the terminal is in the near-field region only in the horizontal dimension; a second near-field codebook, where the second near-field codebook is a codebook used by the terminal when the terminal is in the near-field region only in the vertical dimension; and a third near-field codebook, where the third near-field codebook is a codebook used by the terminal when the terminal is in the near-field region in both the horizontal dimension and the vertical dimension.

In some embodiments, the near-field codebook is used for single-polarized single-layer transmission; or the near-field codebook is used for dual-polarized multi-layer transmission.

In some embodiments, the method includes: sending, by the terminal, second information to the network device, where the second information is used for indicating a co-phase coefficient corresponding to the first codeword.

In some embodiments, determining, by the terminal, the first codeword in the near-field codebook includes: determining, by the terminal, a first basis vector and a second basis vector; and determining, by the terminal, the first codeword based on the first basis vector and the second basis vector.

In some embodiments, the method includes: determining, by the terminal, that a switching between a far-field region and the near-field region occurs, and sending, by the terminal, third information to the network device, where the third information is used for indicating whether the second basis vector is changed.

In some embodiments, determining, by the terminal, that the switching between the far-field region and the near-field region occurs includes at least one of the following: determining, by the terminal, that the terminal switches from the near-field region to the far-field region in a horizontal dimension; determining, by the terminal, that the terminal switches from the near-field region to the far-field region in a vertical dimension; determining, by the terminal, that the terminal switches from the near-field region to the far-field region in both the horizontal dimension and the vertical dimension; determining, by the terminal, that the terminal switches from the far-field region to the near-field region in the horizontal dimension; determining, by the terminal, that the terminal switches from the far-field region to the near-field region in the vertical dimension; and determining, by the terminal, that the terminal switches from the far-field region to the near-field region in both the horizontal dimension and the vertical dimension.

FIG. 4A is a schematic flowchart of a communication method illustrated according to an embodiment of the present disclosure. As shown in FIG. 4A, the embodiment of the present disclosure relates to a communication method (network device side), and the method includes the following steps S4101 to S4103.

At step S4101, third information is obtained.

Optional implementations of step S4101 may refer to optional implementations of step S2105 in FIG. 2 and other related parts in the embodiments involved in FIG. 2, which will not be repeated here.

In some embodiments, the network device receives the third information sent by the terminal, but is not limited thereto, and may also receive the third information sent by other entities.

In some embodiments, the network device obtains the third information stipulated by a protocol.

In some embodiments, the network device obtains the third information from upper layer(s).

In some embodiments, the network device obtains the third information through processing.

In some embodiments, step S4101 is omitted, and the terminal independently implements the function indicated by the third information, or the function is default or by default.

At step S4102, first information is obtained.

Optional implementations of step S4102 may refer to optional implementations of step S2106 in FIG. 2 and other related parts in the embodiments involved in FIG. 2, which will not be repeated here.

In some embodiments, the network device receives the first information sent by the terminal, but is not limited thereto, and may also receive the first information sent by other entities.

In some embodiments, the network device obtains the first information stipulated by a protocol.

In some embodiments, the network device obtains the first information from upper layer(s).

In some embodiments, the network device obtains the first information through processing.

At step S4103, second information is obtained.

Optional implementations of step S4103 may refer to optional implementations of step S2107 in FIG. 2 and other related parts in the embodiments involved in FIG. 2, which will not be repeated here.

In some embodiments, the network device receives the second information sent by the terminal, but is not limited thereto, and may also receive the second information sent by other entities.

In some embodiments, the network device obtains the second information stipulated by a protocol.

In some embodiments, the network device obtains the second information from upper layer(s).

In some embodiments, the network device obtains the second information through processing.

In some embodiments, step S4103 is omitted, and the terminal independently implements the function indicated by the second information, or the function is default or by default.

The communication method involved in the embodiments of the present disclosure may include at least one of steps S4101 to S4103. For example, step S4101 may be implemented as an independent embodiment, step S4102 may be implemented as an independent embodiment, step S4101 and step S4102 may be implemented as an independent embodiment, and step S4102 and step S4103 may be implemented as an independent embodiment, but are not limited thereto.

In some embodiments, the orders of step S4102 and step S4103 may be exchanged, or step S4102 and step S4103 may be performed simultaneously.

In some embodiments, steps S4101 to S4102 are optional, and one or more of these steps may be omitted or replaced in different embodiments.

In some embodiments, step S4101 and step S4103 are optional, and one or more of these steps may be omitted or replaced in different embodiments.

FIG. 4B is a schematic flowchart of a communication method illustrated according to an embodiment of the present disclosure. As shown in FIG. 4B, the embodiment of the present disclosure relates to a communication method (network device side), and the method includes the following steps S4201 to S4202.

At step S4201, third information is obtained.

Optional implementations of step S4201 may refer to optional implementations of step S2105 in FIG. 2 and step S4101 in FIG. 4A, and other related parts in the embodiments involved in FIG. 2 and FIG. 4A, which will not be repeated here.

At step S4202, first information is obtained.

Optional implementations of step S4202 may refer to optional implementations of step S2106 in FIG. 2 and step S4102 in FIG. 4A, and other related parts in the embodiments involved in FIG. 2 and FIG. 4A, which will not be repeated here.

The communication method involved in the embodiments of the present disclosure may include at least one of steps S4201 to S4202. For example, step S4201 may be implemented as an independent embodiment, and step S4202 may be implemented as an independent embodiment.

In some embodiments, step S4201 is optional, and one or more of these steps may be omitted or replaced in different embodiments.

In some embodiments, step S4202 is optional, and one or more of these steps may be omitted or replaced in different embodiments.

FIG. 4C is a schematic flowchart of a communication method according to an embodiment of the present disclosure. As shown in FIG. 4C, the embodiment of the present disclosure relates to a communication method (network device side), and the method includes the following step S4301.

At step S4301, first information is obtained.

Optional implementations of step S4301 may refer to optional implementations of step S2106 in FIG. 2, step S4102 in FIG. 4A, and step S4202 in FIG. 4B, and other related parts in the embodiments involved in FIG. 2, FIG. 4A, and FIG. 4B, which will not be repeated here.

In some embodiments, the network device receives the first information sent by the terminal, where the first information is used for indicating a first codeword, the first codeword is a codeword in a near-field codebook, the near-field codebook is determined based on a candidate first basis vector, and the candidate first basis vector is a basis vector used for a near-field region.

In some embodiments, the near-field codebook is obtained by multiplying the candidate first basis vector and a second basis vector.

In some embodiments, the candidate first basis vector includes a basis vector in a horizontal dimension and a basis vector in a vertical dimension, and the candidate first basis vector is a Kronecker product of the basis vector in the horizontal dimension and the basis vector in the vertical dimension that are in the candidate first basis vector; and
the candidate second basis vector includes a basis vector in the horizontal dimension and a basis vector in the vertical dimension, and the candidate second basis vector is a Kronecker product of the basis vector in the horizontal dimension and the basis vector in the vertical dimension that are in the candidate second basis vector.

In some embodiments, the first antenna array is any one of: a uniform linear array, and a uniform planar array.

In some embodiments, a number of an antenna port, in a horizontal dimension, of a first antenna array is N₁, and a number of an antenna port, in a vertical dimension, of the first antenna array is N₂, where N₁ is greater than or equal to 1, and N₂ is greater than or equal to 1.

In some embodiments, the candidate first basis vector is determined based on a distance parameter, and the distance parameter includes at least one first distance parameter in the horizontal dimension and at least one second distance parameter in the vertical dimension,
an ${n}_{1}^{′}$-th element ${ν}_{{n}_{1}^{′}}^{"}$ of a basis vector v", in the horizontal dimension, in the candidate first basis vector is: ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$; and an ${n}_{2}^{′}$-th element ${u}_{{n}_{2}^{′}}^{"}$ of a basis vector *u",* in the vertical dimension, in the candidate first basis vector is: ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)$; where ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$*,* and ${n}_{2}^{′} = {n}_{2} + \left({N}_{2}+1\right) / 2$; *o*₁ denotes the first distance parameter corresponding to the candidate first basis vector, *o*₂ denotes the second distance parameter corresponding to the candidate first basis vector, *O*₃ denotes an oversampling factor of the distance parameter in the horizontal dimension, *O*₄ denotes an oversampling factor of the distance parameter in the vertical dimension, *o*₁ = 1,2, ··· , *N*₃*O*₃, and *o*₂ = 1,2, ··· , *N*₄*O*₄; and *j* is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

In some embodiments, ${D}_{x} = {N}_{1} {d}_{x} = {N}_{1} \frac{λ}{2}$*,* and ${D}_{z} = {N}_{2} {d}_{z} = {N}_{2} \frac{λ}{2}$, the ${n}_{1}^{′}$-th element ${ν}_{{n}_{1}^{′}}^{"}$ of the basis vector *v*", in the horizontal dimension, in the candidate first basis vector is: ${ν}_{{n}_{1}^{′}}^{"} = exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$; and the ${n}_{2}^{′}$-th element ${u}_{{n}_{2}^{′}}^{"}$ of the basis vector *u"*, in the vertical dimension, in the candidate first basis vector is: ${u}_{{n}_{2}^{′}}^{"} = exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right)$.

In some embodiments, the candidate second basis vector is determined based on an angle parameter, the angle parameter includes at least one first angle parameter in the horizontal dimension and at least one second angle parameter in the vertical dimension, an ${n}_{1}^{′}$ -th element ${ν}_{{n}_{1}^{′}}^{′}$ of a basis vector *v*', in the horizontal dimension, in the candidate second basis vector is: ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$; and an ${n}_{2}^{′}$-th element ${u}_{{n}_{2}^{′}}^{′}$ of a basis vector *u',* in the vertical dimension, in the candidate second basis vector is: ${u}_{{n}_{2}^{′}}^{′} = exp \left(j\frac{2 π}{λ}⋅\frac{2 {mn}_{2}^{′} {d}_{z}}{{N}_{2} {O}_{2}}\right)$; where *l* denotes the first angle parameter corresponding to the candidate second basis vector, m denotes the second angle parameter corresponding to the candidate second basis vector, *O*₁ denotes an oversampling factor of the angle parameter in the horizontal dimension, *O*₂ denotes an oversampling factor of the angle parameter in the vertical dimension, *l* = 0,1, ··· , *N*₁*O*₁ - 1, and m = 0,1, ··*·* ,*N*₂*O*₂ - 1.

In some embodiments, the first information includes at least one of the following: a first indication field, where the first indication field is used for indicating a first angle parameter corresponding to the first codeword; a second indication field, where the second indication field is used for indicating a second angle parameter corresponding to the first codeword; a third indication field, where the third indication field is used for indicating a first distance parameter corresponding to the first codeword; and a fourth indication field, where the fourth indication field is used for indicating a second distance parameter corresponding to the first codeword.

In some embodiments, the first indication field at least includes $\left⌈{log}_{2} {N}_{1}{O}_{1}\right⌉$ bits; the second indication field at least includes $\left⌈{log}_{2}{N}_{2}{O}_{2}\right⌉$ bits; the third indication field at least includes $\left⌈{log}_{2}{N}_{3}{O}_{3}\right⌉$ bits; and the fourth indication field at least includes $\left⌈{log}_{2} {N}_{4}{O}_{4}\right⌉$ bits.

In some embodiments, the candidate second basis vector is the same as a DFT basis vector in a DL Type I codebook.

In some embodiments, the terminal being in a near-field region of a first antenna array includes at least one of the following: the terminal being in the near-field region only in a horizontal dimension; the terminal being in the near-field region only in a vertical dimension; and the terminal being in the near-field region in both the horizontal dimension and the vertical dimension.

In some embodiments, the near-field codebook includes at least one of the following: a first near-field codebook, where the first near-field codebook is a codebook used by the terminal when the terminal is in the near-field region only in the horizontal dimension; a second near-field codebook, where the second near-field codebook is a codebook used by the terminal when the terminal is in the near-field region only in the vertical dimension; and a third near-field codebook, where the third near-field codebook is a codebook used by the terminal when the terminal is in the near-field region in both the horizontal dimension and the vertical dimension.

In some embodiments, the near-field codebook is used for single-polarized single-layer transmission; or the near-field codebook is used for dual-polarized multi-layer transmission, and the near-field codebook is constructed based on the candidate first basis vector, the candidate second basis vector, and a co-phase coefficient.

In some embodiments, the method includes: receiving, by the network device, second information sent by the terminal, where the second information is used for indicating a co-phase coefficient corresponding to the first codeword.

In some embodiments, the method includes: receiving, by the network device, third information sent by the terminal, where the third information is used for indicating whether a second basis vector is changed.

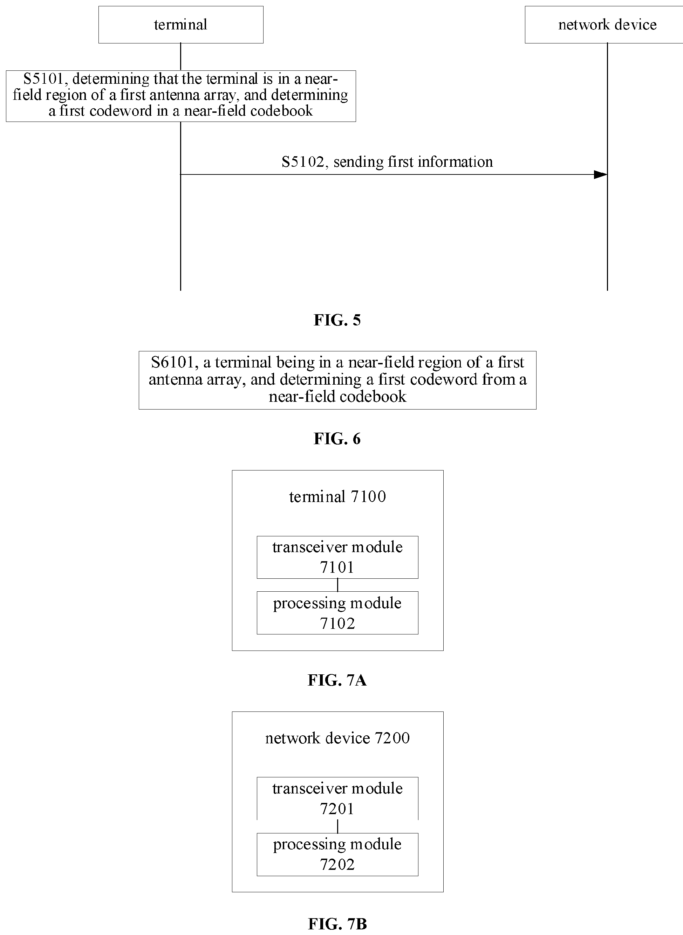

FIG. 5 is a schematic interaction diagram of a communication method illustrated according to an embodiment of the present disclosure. As shown in FIG. 5, the embodiment of the present disclosure relates to a communication method, and the method includes the following steps S5101 to S5102.

At step S5101, a terminal determines that it is in a near-field region of a first antenna array, and determines a first codeword in a near-field codebook.

Optional implementations of step S5101 may refer to optional implementations of step S2102 and step S2104 in FIG. 2, step S3101 and step S3104 in FIG. 3A, step S3201 and step S3204 in FIG. 3B, and step S3301 in FIG. 3C, and other related parts in the embodiments involved in FIG. 2, FIG. 3A, FIG. 3B, FIG. 3C, FIG. 4A, FIG. 4B, and FIG. 4C, which will not be repeated here.

At step S5102, the terminal sends first information to a network device.

Optional implementations of step S5102 may refer to optional implementations of step S2106 in FIG. 2, step S3106 in FIG. 3A, step S3205 in FIG. 3B, step S3302 in FIG. 3C, step S4102 in FIG. 4A, step S4202 in FIG. 4B, and step S4301 in FIG. 4C, and other related parts in the embodiments involved in FIG. 2, FIG. 3A, FIG. 3B, FIG. 3C, FIG. 4A, FIG. 4B, and FIG. 4C, which will not be repeated here.

In some embodiments, the method may include the methods described in the above embodiments on the terminal side and the network device side, which will not be repeated here.

FIG. 6 is a schematic interaction diagram of a communication method illustrated according to an embodiment of the present disclosure. As shown in FIG. 6, the embodiment of the present disclosure relates to a communication method. The method includes the following step S6101.

At step S6101, a terminal is in a near-field region of a first antenna array, and determines a first codeword from a near-field codebook.

In some embodiments, the first antenna array may be a uniform linear array or a uniform planar array.

For a uniform linear array:
in some embodiments, an ${n}_{1}^{′}$-th element of a precoding vector v in the near-field codebook may be calculated as: ${ν}_{{n}_{1}^{′}} = exp \left(j\frac{2 π}{λ}⋅\frac{2 {ln}_{1}^{′} {d}_{x}}{{N}_{1} {O}_{1}}\right) \times exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$; where *N*₁ and *N*₃ respectively denote the numbers of sampling points of the angle domain in the horizontal dimension, and the numbers of sampling points of the distance domain in the horizontal dimension, *O*₁ and *O*₃ respectively denote the oversampling factor of the angle domain in the horizontal dimension, and the oversampling factor of the distance domain in the horizontal dimension, and *l* = 0,1, ··· , *N*₃*O*₁ - 1 and *o*₁ = 1,2, ··· ,*N*₃*O*₃.

The near-field codebook may be designed as the product of the codeword vectors corresponding to two codebooks, that is, the near-field codebook may be calculated as ${ν}_{{n}_{1}^{′}} = {ν}_{{n}_{1}^{′}}^{′} \times {ν}_{{n}_{1}^{′}}^{"}$. The codebook ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$ is the same as the DFT basis vector in the DL Type I codebook in the related art, and the codebook ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$ is a term introduced when the near-field spherical wave is considered.

For example, assuming the antenna spacing of the antenna array in the horizontal dimension is ${d}_{x} = \frac{λ}{2}$, and the length of the antenna array in the horizontal dimension is ${D}_{x} = {N}_{1} {d}_{x} = {N}_{1} \frac{λ}{2}$, then the precoding vector in the near-field codebook may be calculated as: ${ν}_{{n}_{1}^{′}} = exp \left(\frac{j 2 {πln}_{1}^{′}}{{N}_{1} {O}_{1}}\right) \times exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right)$.

It can be understood that codebook ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$ may be the second codebook in the above embodiments, and the codebook ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$ may be the first codebook in the above embodiments.

In some embodiments, the terminal may determine whether it is in the near-field region in the horizontal dimension.

In some embodiments, the network device sends CSI-RS to the terminal, and the terminal performs channel estimation through the CSI-RS and determines whether it is in the near-field region.

In some embodiments, if the terminal is in the far-field region, the terminal, based on an algorithm, traverses and selects the optimal codebook from the far-field codebook, and feeds the optimal codebook back to the network device through a UCI.

In some embodiments, if the terminal is in the near-field region, the terminal, based on an algorithm, traverses and selects the optimal codebook from the near-field codebook, determines the corresponding two-stage codebook, and feeds it back to the network device through a UCI, for example, indicating different feedback parameters through the following information fields:
indicating *l* = 0, ··· *N*₁*O*₁ - 1 by $\left⌈{log}_{2} {N}_{1}{O}_{1}\right⌉$ bits, using wideband or sub-band feedback; indicating *o*₁ = 1, ··· *N*₃*O*₃ -1 or *o*₁ = 1, ··· *N*₃*O*₃ by $\left⌈{log}_{2}{N}_{3}{O}_{3}\right⌉$, using wideband or sub-band feedback; indicating the co-phase coefficient by 1, 2, or 3 bits, corresponding to BPSK, QPSK, and 8-PSK co-phase coefficients, respectively, using wideband or sub-band feedback.

In some embodiments, the terminal, based on a UCI, respectively generates the codewords corresponding to the two-stage codebooks, and multiplies them to obtain the complete near-field codeword.

In some embodiments, when the terminal switches between the near-field region and the far-field region, an additional 1-bit field may be introduced to indicate whether the far-field codeword is changed. If the far-field codeword is not changed, there is no need to update the UCI corresponding to the far-field codeword.

For a uniform planar array:
in some embodiments, the precoding vector may be designed as *v* ⊗ *u,* The ${n}_{1}^{′}$ -th element of the precoding vector v and the ${n}_{2}^{′}$-th element of the precoding vector *u* may be calculated as:
   ${ν}_{{n}_{1}^{′}} = exp \left(j\frac{2 π}{λ}⋅\frac{2 {ln}_{1}^{′} {d}_{x}}{{N}_{1} {O}_{1}}\right) \times exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right) ;$
   ${u}_{{n}_{2}^{′}} = exp \left(j\frac{2 π}{λ}⋅\frac{2 {mn}_{2}^{′} {d}_{z}}{{N}_{2} {O}_{2}}\right) \times exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right) ;$
where *N*₁, *N*₂, *N*₃, and *N*₄ respectively denote the numbers of sampling points of the angle domain in the horizontal dimension, the numbers of sampling points of the angle domain in the vertical dimension, the numbers of sampling points of the distance domain in the horizontal dimension, and the numbers of sampling points of the distance domain in the vertical dimension, *O*₁, *O*₂, *O*₃, and *O*₄ respectively denote the oversampling factor of the angle domain in the horizontal dimension, the oversampling factor of the angle domain in the vertical dimension, the oversampling factor of the distance domain in the horizontal dimension, the oversampling factor of the distance domain in the horizontal dimension, *l* = 0,1, ··· , *N*₁*O*₁ -1, *m* = 0,1,··· , *N*₂*O*₂ - 1, *o*₁ = 1,2, ··· , *N*₃*O*₃, and *o*₂ = 1,2, ··· , *N*₄*O*₄.

In some embodiments, the near-field codebook may be designed as the product of the codeword vectors corresponding to two codebooks. The codebook in the horizontal dimension may be calculated as ${ν}_{{n}_{1}^{′}} = {ν}_{{n}_{1}^{′}}^{′} \times {ν}_{{n}_{1}^{′}}^{"}$, and the codebook in the vertical dimension may be calculated as ${u}_{{n}_{2}^{′}} = {u}_{{n}_{2}^{′}}^{′} \times {u}_{{n}_{2}^{′}}^{"}$. The codebook ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$ and the codebook ${u}_{{n}_{2}^{′}}^{′} = exp \left(j\frac{2 π}{λ}⋅\frac{2 {mn}_{2}^{′} {d}_{z}}{{N}_{2} {O}_{2}}\right)$ are the same as the DFT basis vector in the DL Type I codebook in the related art, and codebooks ${ν}_{{n}_{1}^{′}}^{"} = exp \left(j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$ and ${u}_{{n}_{2}^{′}} = exp \left(j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)$ are terms introduced when the near-field spherical wave is considered.

For example, assuming the antenna spacing of the antenna array in the horizontal dimension and the vertical dimension is ${d}_{x} = {d}_{z} = \frac{λ}{2}$, and the lengths of the antenna array in the horizontal dimension and the vertical dimension are respectively ${D}_{x} = {N}_{1} {d}_{x} = {N}_{1} \frac{λ}{2}$*Dₓ* and ${D}_{z} = {N}_{2} {d}_{z} = {N}_{2} \frac{λ}{2}$, then the precoding vectors *v* and *u* may be calculated as: ${ν}_{{n}_{1}^{′}} = exp \left(\frac{j 2 {πln}_{1}^{′}}{{N}_{1} {O}_{1}}\right) \times exp \left(\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right) ;$ ${u}_{{n}_{2}^{′}} = exp \left(\frac{j 2 {πmn}_{2}^{′}}{{N}_{2} {O}_{2}}\right) \times exp \left(\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

The codebooks ${ν}_{{n}_{1}^{′}}^{′} = exp \left(j\frac{2 π}{λ}⋅\frac{2 {ln}_{1}^{′} {d}_{x}}{{N}_{1} {O}_{1}}\right)$ and ${u}_{{n}_{2}^{′}}^{′} = exp \left(j\frac{2 π}{λ}⋅\frac{2 {mn}_{2}^{′} {d}_{z}}{{N}_{2} {O}_{2}}\right)$ may be the second codebook in the above embodiments, and the codebooks ${ν}_{{n}_{1}^{′}}^{"} = exp \left(j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right)$ and ${u}_{{n}_{2}^{′}} = exp \left(j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right)$ may be the first codebook in the above embodiments.

In some embodiments, the terminal may determine whether it is in the near-field region in the horizontal dimension and/or the vertical dimension.

In some embodiments, the network device sends CSI-RS, and the terminal performs channel estimation through the CSI-RS and determines whether the terminal is in the near-field region.

The terminal may respectively determine whether it is in the near-field in the horizontal dimension and the vertical dimension. Since the number of antennas in the horizontal dimension is usually defined to be greater than that in the vertical dimension, the first three of the following four states are the most common states:

both the horizontal dimension and the vertical dimension being in the far-field region; the horizontal dimension being in the near-field region and the vertical dimension being in the far-field region; both the horizontal dimension and the vertical dimension being in the near-field region; the horizontal dimension being in the far-field region and the vertical dimension being in the near-field region.

In some embodiments, if the terminal is in the far-field region in the horizontal dimension or the vertical dimension, the UE, based on an algorithm, traverses and selects the optimal codebook from the far-field codebook, and feeds the optimal codebook back to the network device through a UCI.

In some embodiments, if the terminal is in the near-field region in the horizontal dimension or the vertical dimension, the UE, based on an algorithm, traverses and selects the optimal codebook from the near-field codebook, determines the corresponding two-stage codebook, and feeds it back to the network device through a UCI, for example, indicating different feedback parameters through the following information fields: indicating *l = 0, ··· N*₁*O*₁ - 1 by $\left⌈{log}_{2} {N}_{1}{O}_{1}\right⌉$ bits, using wideband or sub-band feedback; indicating *m* = 0, ··· *N*₂*O*₂ - 1 by $\left⌈{log}_{2}{N}_{2}{O}_{2}\right⌉$ bits, using wideband or sub-band feedback; indicating *o*₁ = 1, ··· *N*₃*O*₃ -1 or *o*₁ = 1, ··· *N*₃*O*₃ by $\left⌈{log}_{2}{N}_{3}{O}_{3}\right⌉$, using wideband or sub-band feedback; indicating *o*₂ = 1, ··· *N*₄*O*₄ -1 or *o*₂ = 1, ··· *N*₄*O*₄ by $\left⌈{log}_{2} {N}_{4}{O}_{4}\right⌉$ bits, using wideband or sub-band feedback; indicating the co-phase coefficient by 1, 2, or 3 bits, corresponding to BPSK, QPSK, and 8-PSK co-phase coefficients, respectively, using wideband or sub-band feedback.

In some embodiments, the terminal, based on a UCI, respectively generates the codewords corresponding to the two-stage codebooks, and multiplies them to obtain the complete near-field codeword.

In some embodiments, when the terminal switches between the near-field region and the far-field region, an additional 1-bit field may be introduced to indicate whether the far-field codeword is changed. If the far-field codeword is not changed, there is no need to update the UCI corresponding to the far-field codeword.

In the embodiments of the present disclosure, some or all steps and their optional implementations may be arbitrarily combined with some or all steps in other embodiments, and may also be arbitrarily combined with optional implementations of other embodiments.

The embodiments of the present disclosure further propose an apparatus for implementing any of the above methods. For example, an apparatus is proposed, and the apparatus includes units or modules for implementing the steps performed by the terminal in any of the above methods. As another example, another apparatus is proposed, and the apparatus includes units or modules for implementing the steps performed by the network device (e.g., access network device, core network function node, core network device, terminal, network device, etc.) in any of the above methods.

It should be understood that the division of units or modules in the above apparatus is only a logical function division, and in actual implementations, all or part of them may be integrated into one physical entity or physically separated. In addition, the units or modules in the apparatus may be implemented in the form of a processor calling software, for example, the apparatus includes a processor, the processor is connected to a memory, the memory stores instructions, and the processor calls the instructions stored in the memory to implement any of the above methods or implement the functions of the units or modules of the above apparatus, where the processor is, for example, a general-purpose processor, such as a central processing unit (CPU) or a microprocessor, and the memory is a memory within the apparatus or a memory outside the apparatus. Alternatively, the units or modules in the apparatus may be implemented in the form of hardware circuits, and the functions of some or all of the units or modules may be implemented through the design of hardware circuits. The above hardware circuits may be understood as one or more processors; for example, in an implementation, the above hardware circuit is an application-specific integrated circuit (ASIC), and the functions of some or all of the above units or modules are implemented through the design of the logical relationships of the circuit elements; for another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through a configuration file, thereby implementing the functions of some or all of the above units or modules. All units or modules of the above apparatus may be implemented entirely in the form of a processor calling software, or entirely in the form of hardware circuits, or partially in the form of a processor calling software and the remainder in the form of hardware circuits.

In the embodiments of the present disclosure, a processor is a circuit with signal processing capability. In an implementation, the processor may be a circuit with instruction reading and execution capability, such as a central processing unit (CPU), a microprocessor, a graphics processing unit (GPU) (which may be understood as a microprocessor), or a digital signal processor (DSP). In another implementation, the processor may implement certain functions through the logical relationships of hardware circuits. The logical relationships of the hardware circuits may be fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration file and implements the configuration of the hardware circuit may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), a deep learning processing unit (DPU), etc.

FIG. 7A is a schematic structural diagram of a terminal provided according to an embodiment of the present disclosure. As shown in FIG. 7A, a terminal 7100 may include at least one of a transceiver module 7101, and a processing module 7102, etc. In some embodiments, the processing module 7102 is configured to determine that the terminal is in a near-field region of a first antenna array, and determine a first codeword in a near-field codebook, where the near-field codebook is determined based on a candidate first basis vector, and the candidate first basis vector is a basis vector used for the near-field region; the transceiver module 7101 is configured to send first information to a network device, where the first information is used for indicating the first codeword. Optionally, the transceiver module 7101 is configured to perform at least one of the communication steps (e.g., step S2105, step S2106, step S2107, but not limited thereto) of sending and/or receiving performed by the terminal in any of the above methods, which will not be repeated here. Optionally, the processing module 7102 is configured to perform at least one of other steps (e.g., step S2101, step S2102, step S2103, step S2104, step S2105) performed by the terminal in any of the above methods, which will not be repeated here.

FIG. 7B is a schematic structural diagram of a network device provided according to an embodiment of the present disclosure. As shown in FIG. 7B, a network device 7200 may include at least one of a transceiver module 7201, and a processing module 7202, etc. In some embodiments, the transceiver module 7201 is configured to receive first information sent by a terminal, where the first information is used for indicating a first codeword, the first codeword is a codeword in a near-field codebook, the near-field codebook is determined based on a candidate first basis vector, and the candidate first basis vector is a basis vector used for a near-field region. Optionally, the transceiver module 7201 is configured to perform at least one of the communication steps (e.g., step S2105, step S2106, step S2107, but not limited thereto) of sending and/or receiving performed by the network device in any of the above methods, which will not be repeated here. Optionally, the processing module 7202 is configured to perform at least one of other steps performed by the network device in any of the above methods.

In some embodiments, the transceiver module may include a sending module and/or a receiving module. The sending module and the receiving module may be separate or integrated together. Optionally, the transceiver module may be interchanged with a transceiver.

In some embodiments, the processing module may be one module or may include a plurality of sub-modules. Optionally, the plurality of sub-modules respectively perform all or part of the steps required to be performed by the processing module. Optionally, the processing module may be interchanged with a processor.

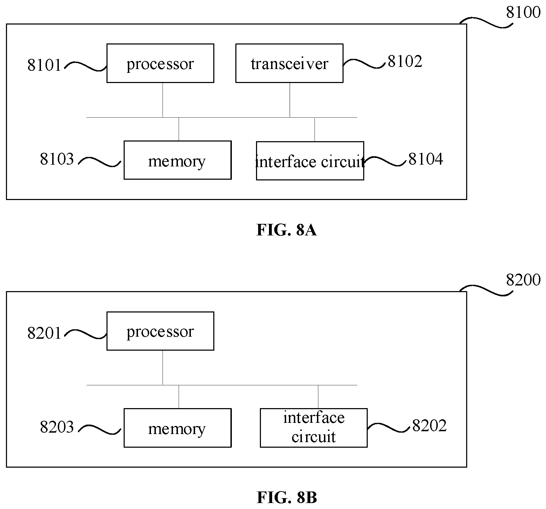

FIG. 8A is a schematic structural diagram of a communication device 8100 provided according to an embodiment of the present disclosure. The communication device 8100 may be a network device (e.g., access network device, core network device, etc.), or a terminal (e.g., user equipment, etc.), or a chip, chip system, or processor, etc., that supports a network device in implementing any of the above methods, or a chip, chip system, or processor, etc., that supports a terminal in implementing any of the above methods. The communication device 8100 may be configured to implement the methods described in the above method embodiments, and details may be found in the description of the above method embodiments.

As shown in FIG. 8A, the communication device 8100 includes one or more processors 8101. The processor 8101 may be a general-purpose processor or a special-purpose processor, for example, a baseband processor or a central processing unit. The baseband processor may be configured to process communication protocols and communication data, and the central processing unit may be configured to control a communication apparatus (e.g., base station, baseband chip, terminal device, terminal device chip, DU or CU, etc.), execute programs, and process data of programs. Optionally, the communication device 8100 is configured to perform any of the above methods. Optionally, the one or more processors 8101 are configured to call instructions to cause the communication device 8100 to perform any of the above methods.

In some embodiments, the communication device 8100 further includes one or more transceivers 8102. When the communication device 8100 includes one or more transceivers 8102, the transceiver 8102 performs at least one of the communication steps (e.g., step S2105, step S2106, step S2107, but not limited thereto) of sending and/or receiving in the above methods, and the processor 8101 performs at least one of other steps (e.g., step S2101, step S2102, step S2103, step S2104, step S2105, but not limited thereto). In optional embodiments, the transceiver may include a receiver and/or a sender, and the receiver and the sender may be separate or integrated together. Optionally, terms such as transceiver, transceiver unit, transceiver machine, transceiver circuit, interface circuit, and interface may be interchanged; terms such as sender, sending unit, sending machine, and sending circuit may be interchanged; terms such as receiver, receiving unit, receiving machine, and receiving circuit may be interchanged.

In some embodiments, the communication device 8100 further includes one or more memories 8103 for storing data. Optionally, all or part of the memory 8103 may also be outside the communication device 8100. In optional embodiments, the communication device 8100 may include one or more interface circuits 8104. Optionally, the interface circuit 8104 is connected to the memory 8102, and the interface circuit 8104 may be configured to receive data from the memory 8102 or other devices, and may be configured to send data to the memory 8102 or other devices. For example, the interface circuit 8104 may read data stored in the memory 8102, and send the data to the processor 8101.

The communication device 8100 in the above embodiment description may be a network device or a terminal, but the scope of the communication device 8100 described in the present disclosure is not limited thereto, and the structure of the communication device 8100 may not be limited by FIG. 8A. The communication device may be an independent device or may be part of a larger device. For example, the communication device may be: (1) an independent integrated circuit (IC), or a chip, or a chip system or sub-system; (2) a collection of one or more ICs, optionally, the IC collection may also include a storage component for storing data and programs; (3) an ASIC, such as a modem; (4) a module that can be embedded in other devices; (5) a receiver, terminal device, intelligent terminal device, cellular phone, wireless device, handset, mobile unit, vehicle-mounted device, network device, cloud device, artificial intelligence device, etc.; (6) others, etc.

FIG. 8B is a schematic structural diagram of a chip 8200 provided according to an embodiment of the present disclosure. For the case where the communication device 8100 is a chip or a chip system, reference may be made to the schematic structural diagram of the chip 8200 shown in FIG. 8B, but it is not limited thereto.

The chip 8200 includes one or more processors 8201. The chip 8200 is configured to perform any of the above methods.

In some embodiments, the chip 8200 further includes one or more interface circuits 8202. Optionally, terms such as interface circuit, interface, and transceiver pin may be interchanged. In some embodiments, the chip 8200 further includes one or more memories 8203 for storing data. Optionally, all or part of the memory 8203 may be outside the chip 8200. Optionally, the interface circuit 8202 is connected to the memory 8203, and the interface circuit 8202 may be configured to receive data from the memory 8203 or other devices, and may be configured to send data to the memory 8203 or other devices. For example, the interface circuit 8202 may read data stored in the memory 8203 and send the data to the processor 8201.

In some embodiments, the interface circuit 8202 performs at least one of the communication steps (e.g., step S2105, step S2106, step S2107, but not limited thereto) of sending and/or receiving in the above methods. The interface circuit 8202 performing the communication steps of sending and/or receiving in the above methods means, for example, that the interface circuit 8202 performs data exchange between the processor 8201, the chip 8200, the memory 8203, or a transceiver device. In some embodiments, the processor 8201 performs at least one of other steps (e.g., step S2101, step S2102, step S2103, step S2104, step S2105, but not limited thereto).

The modules and/or devices described in the embodiments of the virtual apparatus, physical apparatus, chip, etc., may be combined or separated arbitrarily as appropriate. Optionally, some or all of the steps may also be performed cooperatively by multiple modules and/or devices, which is not limited here.

The present disclosure further provides a storage medium. The storage medium stores an instruction. The instruction, when run on the communication device 8100, causes the communication device 8100 to perform any of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further provides a program product. The program product, when executed by the communication device 8100, causes the communication device 8100 to perform any of the above methods. Optionally, the program product is a computer program product.

The present disclosure further provides a computer program. The computer program, when run on a computer, causes the computer to perform any of the above methods.

## Claims

1. A communication method, **characterized in that** the method comprises:
determining, by a terminal, that the terminal is in a near-field region, and determining, by the terminal, a first codeword in a near-field codebook, wherein the near-field codebook is determined based on a candidate first basis vector, and the candidate first basis vector is a basis vector used for the near-field region; and
sending, by the terminal, first information to a network device, wherein the first information is used for indicating the first codeword.

2. The method according to claim 1, wherein the near-field codebook is determined based on the candidate first basis vector and a candidate second basis vector, and the candidate second basis vector is a basis vector of a codebook used by the terminal in a far-field region.

3. The method according to claim 1 or 2, wherein
the candidate first basis vector comprises a basis vector in a horizontal dimension and a basis vector in a vertical dimension, and the candidate first basis vector is a Kronecker product of the basis vector in the horizontal dimension and the basis vector in the vertical dimension that are in the candidate first basis vector; and
a candidate second basis vector comprises a basis vector in the horizontal dimension and a basis vector in the vertical dimension, and the candidate second basis vector is a Kronecker product of the basis vector in the horizontal dimension and the basis vector in the vertical dimension that are in the candidate second basis vector.

4. The method according to any one of claims 1 to 3, wherein a number of an antenna port, in a horizontal dimension, of a first antenna array of the network device is N₁, and a number of an antenna port, in a vertical dimension, of the first antenna array of the network device is N₂, wherein N₁ is greater than or equal to 1, and N₂ is greater than or equal to 1.

5. The method according to claim 4, wherein the candidate first basis vector is determined based on a distance parameter, and the distance parameter comprises at least one first distance parameter in the horizontal dimension and at least one second distance parameter in the vertical dimension,
an ${n}_{1}^{′}$-th element ${ν}_{{n}_{1}^{′}}^{"}$ of a basis vector v", in the horizontal dimension, in the candidate first basis vector is: ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right) ;$ and
an ${n}_{2}^{′}$-th element ${u}_{{n}_{2}^{′}}^{"}$ of a basis vector *u",* in the vertical dimension, in the candidate first basis vector is: ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right) ;$
wherein ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$, and ${n}_{2}^{′} = {n}_{2} + \left({N}_{2}+1\right) / 2$;
*o*₁ denotes the first distance parameter corresponding to the candidate first basis vector, *o*₂ denotes the second distance parameter corresponding to the candidate first basis vector, *O*₃ denotes an oversampling factor of the distance parameter in the horizontal dimension, *O*₄ denotes an oversampling factor of the distance parameter in the vertical dimension, *o*₁ = 1,2, ··· , *N*₃*O*₃, and *o*₂ = 1,2, ··· , *N*₄*O*₄; and
*j* is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

6. The method according to claim 5, wherein ${D}_{x} = {N}_{1} {d}_{x} = {N}_{1} \frac{λ}{2}$, and ${D}_{z} = {N}_{2} {d}_{z} = {N}_{2} \frac{λ}{2}$,
the ${n}_{1}^{′}$-th element ${ν}_{{n}_{1}^{′}}^{"}$ of the basis vector v", in the horizontal dimension, in the candidate first basis vector is: ${ν}_{{n}_{1}^{′}}^{"} = exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right) ;$ and
the ${n}_{2}^{′}$-th element ${u}_{{n}_{2}^{′}}^{"}$ of the basis vector *u",* in the vertical dimension, in the candidate first basis vector is: ${u}_{{n}_{2}^{′}}^{"} = exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

7. The method according to claim 5 or 6, wherein a candidate second basis vector is determined based on an angle parameter, and the angle parameter comprises at least one first angle parameter in the horizontal dimension and at least one second angle parameter in the vertical dimension,
an ${n}_{1}^{′}$-th element ${ν}_{{n}_{1}^{′}}^{′}$ of a basis vector *v'* , in the horizontal dimension, in the candidate second basis vector is: ${ν}_{{n}_{1}^{′}}^{′} = exp \left(j\frac{2 π}{λ}⋅\frac{2 {ln}_{1}^{′} {d}_{x}}{{N}_{1} {O}_{1}}\right) ;$ and
an ${n}_{2}^{′}$-th element ${u}_{{n}_{2}^{′}}^{′}$ of a basis vector *u',* in the vertical dimension, in the candidate second basis vector is: ${u}_{{n}_{2}^{′}}^{′} = exp \left(j\frac{2 π}{λ}⋅\frac{2 {mn}_{2}^{′} {d}_{z}}{{N}_{2} {O}_{2}}\right) ;$
wherein *l* denotes the first angle parameter corresponding to the candidate second basis vector, *m* denotes the second angle parameter corresponding to the candidate second basis vector, *O*₁ denotes an oversampling factor of the angle parameter in the horizontal dimension, *O*₂ denotes an oversampling factor of the angle parameter in the vertical dimension, *l* = 0,1, ··· , *N*₁*O*₁ - 1, and *m* = 0,1, ··· , *N*₂*O*₂ - 1.

8. The method according to any one of claims 1 to 7, wherein the first information comprises at least one of the following:
a first indication field, wherein the first indication field is used for indicating a first angle parameter corresponding to the first codeword;
a second indication field, wherein the second indication field is used for indicating a second angle parameter corresponding to the first codeword;
a third indication field, wherein the third indication field is used for indicating a first distance parameter corresponding to the first codeword; and
a fourth indication field, wherein the fourth indication field is used for indicating a second distance parameter corresponding to the first codeword.

9. The method according to claim 8, wherein
the first indication field at least comprises $\left⌈{log}_{2} {N}_{1}{O}_{1}\right⌉$ bits;
the second indication field at least comprises $\left⌈{log}_{2}{N}_{2}{O}_{2}\right⌉$ bits;
the third indication field at least comprises $\left⌈{log}_{2}{N}_{3}{O}_{3}\right⌉$ bits; and
the fourth indication field at least comprises $\left⌈{log}_{2} {N}_{4}{O}_{4}\right⌉$ bits.

10. The method according to any one of claims 1 to 9, wherein a candidate second basis vector is the same as a discrete fourier transform (DFT) basis vector in a downlink (DL) Type I codebook.

11. The method according to any one of claims 1 to 11, wherein determining, by the terminal, that the terminal is in a near-field region of a first antenna array comprises at least one of the following:
determining, by the terminal, that the terminal is in the near-field region only in a horizontal dimension;
determining, by the terminal, that the terminal is in the near-field region only in a vertical dimension; and
determining, by the terminal, that the terminal is in the near-field region in both the horizontal dimension and the vertical dimension.

12. The method according to claim 11, wherein the near-field codebook comprises at least one of the following:
a first near-field codebook, wherein the first near-field codebook is a codebook used by the terminal when the terminal is in the near-field region only in the horizontal dimension;
a second near-field codebook, wherein the second near-field codebook is a codebook used by the terminal when the terminal is in the near-field region only in the vertical dimension; and
a third near-field codebook, wherein the third near-field codebook is a codebook used by the terminal when the terminal is in the near-field region in both the horizontal dimension and the vertical dimension.

13. The method according to any one of claims 1 to 12, wherein the near-field codebook is used for single-polarized single-layer transmission; or
the near-field codebook is used for dual-polarized multi-layer transmission.

14. The method according to claim 13, wherein the method comprises:
sending, by the terminal, second information to the network device, wherein the second information is used for indicating a co-phase coefficient corresponding to the first codeword.

15. The method according to any one of claims 1 to 14, wherein the determining, by the terminal, the first codeword in the near-field codebook comprises:
determining, by the terminal, a first basis vector and a candidate second basis vector; and
determining, by the terminal, the first codeword based on the first basis vector and the second basis vector.

16. The method according to claim 15, wherein the method comprises:
determining, by the terminal, that a switching between a far-field region and the near-field region occurs; and
sending, by the terminal, third information to the network device, wherein the third information is used for indicating whether the second basis vector is changed.

17. The method according to claim 16, wherein the determining, by the terminal, that the switching between the far-field region and the near-field region occurs comprises at least one of the following:
determining, by the terminal, that the terminal switches from the near-field region to the far-field region in a horizontal dimension;
determining, by the terminal, that the terminal switches from the near-field region to the far-field region in a vertical dimension;
determining, by the terminal, that the terminal switches from the near-field region to the far-field region in both the horizontal dimension and the vertical dimension;
determining, by the terminal, that the terminal switches from the far-field region to the near-field region in the horizontal dimension;
determining, by the terminal, that the terminal switches from the far-field region to the near-field region in the vertical dimension; and
determining, by the terminal, that the terminal switches from the far-field region to the near-field region in both the horizontal dimension and the vertical dimension.

18. A communication method, **characterized in that** the method comprises:
receiving, by a network device, first information sent by a terminal, wherein the first information is used for indicating a first codeword, the first codeword is a codeword in a near-field codebook, the near-field codebook is determined based on a candidate first basis vector, and the candidate first basis vector is a basis vector used for a near-field region.

19. The method according to claim 18, wherein the near-field codebook is determined based on the candidate first basis vector and a second basis vector, and the candidate second basis vector is a basis vector of a codebook used by the terminal in a far-field region.

20. The method according to claim 18 or 19, wherein
the candidate first basis vector comprises a basis vector in a horizontal dimension and a basis vector in a vertical dimension, and the candidate first basis vector is a Kronecker product of the basis vector in the horizontal dimension and the basis vector in the vertical dimension that are in the candidate first basis vector; and
a candidate second basis vector comprises a basis vector in the horizontal dimension and a basis vector in the vertical dimension, and the candidate second basis vector is a Kronecker product of the basis vector in the horizontal dimension and the basis vector in the vertical dimension that are in the candidate second basis vector.

21. The method according to any one of claims 18 to 20, wherein a number of an antenna port, in a horizontal dimension, of a first antenna array of the network device is N₁, and a number of an antenna port, in a vertical dimension, of the first antenna array of the network device is N₂, wherein N₁ is greater than or equal to 1, and N₂ is greater than or equal to 1.

22. The method according to claim 21, wherein the candidate first basis vector is determined based on a distance parameter, and the distance parameter comprises at least one first distance parameter in the horizontal dimension and at least one second distance parameter in the vertical dimension,
an ${n}_{1}^{′}$-th element ${ν}_{{n}_{1}^{′}}^{"}$ of a basis vector v", in the horizontal dimension, in the candidate first basis vector is: ${ν}_{{n}_{1}^{′}}^{"} = exp \left(-j\frac{2 π}{λ}⋅\frac{\left({\left({n}_{1}^{′}\right)}^{2}-{n}_{1}^{′}\left({N}_{1}+1\right)\right) {d}_{x}^{2} {λN}_{3}^{2} {O}_{3}^{2}}{4 {o}_{1}^{2} {D}_{x}^{2}}\right) ;$ and
an ${n}_{2}^{′}$-th element ${u}_{{n}_{2}^{′}}^{"}$ of a basis vector *u"*, in the vertical dimension, in the candidate first basis vector is: ${u}_{{n}_{2}^{′}}^{"} = exp \left(-j\frac{2 π}{λ}⋅\frac{\left({\left({n}_{2}^{′}\right)}^{2}-{n}_{2}^{′}\left({N}_{2}+1\right)\right) {d}_{z}^{2} {λN}_{4}^{2} {O}_{4}^{2}}{4 {o}_{2}^{2} {D}_{z}^{2}}\right) ;$
wherein ${n}_{1}^{′}$ denotes an index of the antenna port in the horizontal dimension, ${n}_{2}^{′}$ denotes an index of the antenna port in the vertical dimension, ${n}_{1}^{′} = {n}_{1} + \left({N}_{1}+1\right) / 2$, and ${n}_{2}^{′} = {n}_{2} + \left({N}_{2}+1\right) / 2$;
*o*₁ denotes the first distance parameter corresponding to the candidate first basis vector, *o*₂ denotes the second distance parameter corresponding to the candidate first basis vector, *O*₃ denotes an oversampling factor of the distance parameter in the horizontal dimension, *O*₄ denotes an oversampling factor of the distance parameter in the vertical dimension, *o*₁ = 1,2, ··· , *N*₃*O*₃, and *o*₂ = 1,2, ··· , *N*₄*O*₄; and
*j* is an imaginary unit, *λ* denotes a wavelength of a wireless signal, *dₓ* denotes an antenna spacing of the first antenna array in the horizontal dimension, *d_{z}* denotes an antenna spacing of the first antenna array in the vertical dimension, *Dₓ* denotes a length of the first antenna array in the horizontal dimension, and *D_{z}* denotes a length of the first antenna array in the vertical dimension.

23. The method according to claim 22, wherein ${D}_{x} = {N}_{1} {d}_{x} = {N}_{1} \frac{λ}{2}$, and ${D}_{z} = {N}_{2} {d}_{z} = {N}_{2} \frac{λ}{2}$,
the ${n}_{1}^{′}$-th element ${ν}_{{n}_{1}^{′}}^{"}$ of the basis vector *v"*, in the horizontal dimension, in the candidate first basis vector is: ${ν}_{{n}_{1}^{′}}^{"} = exp \left(-\frac{jπ \left({\left({n}_{1}^{′}\right)}^{2}-{n}_{1}^{′}\left({N}_{1}+1\right)\right) {N}_{3}^{2} {O}_{3}^{2}}{2 {o}_{1}^{2} {N}_{1}^{2}}\right) ;$ and
the ${n}_{2}^{′}$-th element ${u}_{{n}_{2}^{′}}^{"}$ of the basis vector *u",* in the vertical dimension, in the candidate first basis vector is: ${u}_{{n}_{2}^{′}}^{"} = exp \left(-\frac{jπ \left({\left({n}_{2}^{′}\right)}^{2}-{n}_{2}^{′}\left({N}_{2}+1\right)\right) {N}_{4}^{2} {O}_{4}^{2}}{2 {o}_{2}^{2} {N}_{2}^{2}}\right) .$

24. The method according to claim 22 or 23, wherein a candidate second basis vector is determined based on an angle parameter, and the angle parameter comprises at least one first angle parameter in the horizontal dimension and at least one second angle parameter in the vertical dimension,
an ${n}_{1}^{′}$-th element ${ν}_{{n}_{1}^{′}}^{′}$ of a basis vector *v'* , in the horizontal dimension, in the candidate second basis vector is: ${ν}_{{n}_{1}^{′}}^{′} = exp \left(j\frac{2 π}{λ}⋅\frac{2 {ln}_{1}^{′} {d}_{x}}{{N}_{1} {O}_{1}}\right) ;$ and
an ${n}_{2}^{′}$-th element ${u}_{{n}_{2}^{′}}^{′}$ of a basis vector *u',* in the vertical dimension, in the candidate second basis vector is: ${u}_{{n}_{2}^{′}}^{′} = exp \left(j\frac{2 π}{λ}⋅\frac{2 {mn}_{2}^{′} {d}_{z}}{{N}_{2} {O}_{2}}\right) ;$
wherein *l* denotes the first angle parameter corresponding to the candidate second basis vector, m denotes the second angle parameter corresponding to the candidate second basis vector, *O*₁ denotes an oversampling factor of the angle parameter in the horizontal dimension, *O*₂ denotes an oversampling factor of the angle parameter in the vertical dimension, *l* = 0,1, ··· , *N*₁*O*₁ - 1, and *m* = 0,1,···, *N*₂*O*₂ - 1.

25. The method according to any one of claims 18 to 24, wherein the first information comprises at least one of the following:
a first indication field, wherein the first indication field is used for indicating a first angle parameter corresponding to the first codeword;
a second indication field, wherein the second indication field is used for indicating a second angle parameter corresponding to the first codeword;
a third indication field, wherein the third indication field is used for indicating a first distance parameter corresponding to the first codeword; and
a fourth indication field, wherein the fourth indication field is used for indicating a second distance parameter corresponding to the first codeword.

26. The method according to claim 25, wherein
the first indication field at least comprises $\left⌈{log}_{2} {N}_{1}{O}_{1}\right⌉$ bits;
the second indication field at least comprises $\left⌈{log}_{2}{N}_{2}{O}_{2}\right⌉$ bits;
the third indication field at least comprises $\left⌈{log}_{2}{N}_{3}{O}_{3}\right⌉$ bits; and
the fourth indication field at least comprises $\left⌈{log}_{2} {N}_{4}{O}_{4}\right⌉$ bits.

27. The method according to any one of claims 18 to 26, wherein a candidate second basis vector is the same as a discrete fourier transform (DFT) basis vector in a downlink (DL) Type I codebook.

28. The method according to any one of claims 18 to 27, wherein the terminal being in a near-field region of a first antenna array comprises at least one of the following:
the terminal being in the near-field region only in a horizontal dimension;
the terminal being in the near-field region only in a vertical dimension; and
the terminal being in the near-field region in both the horizontal dimension and the vertical dimension.

29. The method according to claim 28, wherein the near-field codebook comprises at least one of the following:
a first near-field codebook, wherein the first near-field codebook is a codebook used by the terminal when the terminal is in the near-field region only in the horizontal dimension;
a second near-field codebook, wherein the second near-field codebook is a codebook used by the terminal when the terminal is in the near-field region only in the vertical dimension; and
a third near-field codebook, wherein the third near-field codebook is a codebook used by the terminal when the terminal is in the near-field region in both the horizontal dimension and the vertical dimension.

30. The method according to any one of claims 18 to 29, wherein the near-field codebook is used for single-polarized single-layer transmission; or
the near-field codebook is used for dual-polarized multi-layer transmission.

31. The method according to claim 30, wherein the method comprises:
receiving, by the network device, second information sent by the terminal, wherein the second information is used for indicating a co-phase coefficient corresponding to the first codeword.

32. The method according to any one of claims 18 to 31, wherein the method comprises:
receiving, by the network device, third information sent by the terminal, wherein the third information is used for indicating whether a second basis vector is changed.

33. A terminal, **characterized in that** the terminal comprises:
a processing module, configured to determine that the terminal is in a near-field region, and determine a first codeword in a near-field codebook, wherein the near-field codebook is determined based on a candidate first basis vector, and the candidate first basis vector is a basis vector used for the near-field region; and
a transceiver module, configured to send first information to a network device, wherein the first information is used for indicating the first codeword.

34. A network device, **characterized in that** the network device comprises:
a transceiver module, configured to receive first information sent by a terminal, wherein the first information is used for indicating a first codeword, the first codeword is a codeword in a near-field codebook, the near-field codebook is determined based on a candidate first basis vector, and the candidate first basis vector is a basis vector used for a near-field region.

35. A communication method, **characterized in that** the method is applied to a communication system, the communication system comprises a terminal and a network device, the method comprises:
determining, by the terminal, that the terminal is in a near-field region, and determining, by the terminal, a first codeword in a near-field codebook, wherein the near-field codebook is determined based on a candidate first basis vector, and the candidate first basis vector is a basis vector used for the near-field region.

36. The method according to claim 35, wherein the method comprises:
sending, by the terminal, first information to the network device; wherein the first information is used for indicating the first codeword, or the first information is used for indicating the near-field codebook.

37. The method according to claim 35 or 36, wherein the method comprises:
sending, by the terminal, second information to the network device; wherein the second information is used for indicating a co-phase coefficient corresponding to the first codeword.

38. The method according to any one of claims 35 to 37, wherein the method comprises:
receiving, by the network device, third information sent by the terminal; wherein the third information is used for indicating that a switching between a far-field region and the near-field region occurs to the terminal.

39. A terminal, **characterized in** comprising:
one or more processors; and
a memory coupled to the one or more processors, wherein the memory comprises an executable instruction, and the executable instruction, when executed by the one or more processors, causes the terminal to perform the communication method according to any one of claims 1 to 17.

40. A network device, **characterized in** comprising:
one or more processors; and
a memory coupled to the one or more processors, wherein the memory comprises an executable instruction, and the executable instruction, when executed by the one or more processors, causes the network device to perform the communication method according to any one of claims 18 to 32.

41. A communication system, **characterized in** comprising a terminal and a network device, wherein the terminal is configured to implement the communication method according to any one of claims 1 to 17, and the network device is configured to implement the communication method according to any one of claims 18 to 32.

42. A storage medium, wherein the storage medium stores an instruction, **characterized in that** the instruction, when executed on a communication device, causes the communication device to perform the communication method according to any one of claims 1 to 17 or claims 18 to 32.
